(19) Europäisches Patentamt
European Patent Office
Office européen des brevets

(11) **EP 3 963 734 B1**

(12) **EUROPEAN PATENT SPECIFICATION**

(45) Date of publication and mention
of the grant of the patent:
**25.10.2023  Bulletin 2023/43**

(21) Application number: **19740560.8**

(22) Date of filing: **16.07.2019**

(51) International Patent Classification (IPC):
**H04B 7/0452** *(2017.01)*

(52) Cooperative Patent Classification (CPC):
**H04B 7/0452**

(86) International application number:
**PCT/EP2019/069107**

(87) International publication number:
**WO 2021/008692 (21.01.2021 Gazette 2021/03)**

(54) **METHOD AND ARCHITECTURE FOR OPTIMIZING MULTI-USER MULTI-INPUT-MULTI-OUTPUT (MU-MIMO) TRANSMISSIONS GROUPING**

VERFAHREN UND ARCHITEKTUR ZUR OPTIMIERUNG DER GRUPPIERUNG VON ÜBERTRAGUNGEN MIT MEHREREN BENUTZERN SOWIE MEHREREN EINGÄNGEN UND AUSGÄNGEN (MU-MIMO)

PROCÉDÉ ET ARCHITECTURE POUR OPTIMISER UN GROUPEMENT DE TRANSMISSIONS MULTI-UTILISATEUR À ENTRÉES MULTIPLES ET SORTIES MULTIPLES (MU-MIMO)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.03.2022  Bulletin 2022/10**

(73) Proprietor: **Huawei Technologies Co., Ltd.
Shenzhen, Guangdong 518129 (CN)**

(72) Inventors:
• **REICH, Mor
80992 Munich (DE)**

• **SHILO, Shimon
80992 Munich (DE)**
• **EZRI, Doron
80992 Munich (DE)**
• **BEN-ARIE, Yaron
80992 Munich (DE)**

(74) Representative: **Isarpatent
Patent- und Rechtsanwälte Barth
Charles Hassa Peckmann & Partner mbB
Friedrichstrasse 31
80801 München (DE)**

(56) References cited:
**US-A1- 2018 092 102    US-A1- 2018 176 743**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to transmitters of a wireless access point, AP, and methods of optimizing stream grouping for such transmitters to enhance multi-user multi input multi output; MU-MIMO transmission.

BACKGROUND

Optimizing grouping for MU-MIMO and/or Single-User MIMO (SU-MIMO) transmissions and, more specifically, but not exclusively, to optimizing grouping for MU-MIMO and/or SU-MIMO transmissions based on a rapidly and efficiently computed estimation of mutual interference between streams in the groups is an important aspect in wireless communications.

As wireless communication has become a corner stone for voice and data worldwide, there is a demand for constant increase in service capacity and bandwidth over the wireless networks, for example, cellular networks, Wireless Local Area Networks (WLAN) (e.g. Wi-Fi) and/or the likes. The wireless communication protocols are therefore constantly evolving to support the need for improved service, for example, increased throughput, reduced latency and improvements in other parameters of the wireless service.

One of the most prominent and efficient methods to increase wireless throughput and improve service is configuring the wireless network access devices, for example, Access Points (AP), routers, cellular cells (base stations), and/or the like to include antenna arrays comprising multiple transmit (TX) antennas and optionally multiple receive (RX) antennas to support MU-MIMO and/or SU-MIMO transmission to one or more wireless stations (users).

In a MIMO transmission multiple transmission streams may be simultaneously transmitted to one or more stations which may each include one or more RX antennas.

Wireless communication environments in which a plurality of users are accessing a single access device applying the MIMO transmission protocols may therefore significantly improve the wireless service, for example, increase throughput, reduce latency and/or the like. MIMO transmission may further serve to address the needs for increased throughput and reduced latency for a plurality of applications, for example, high throughput video applications, low latency real-time applications (e.g. autonomous vehicles, IoT systems and devices) and/or the like which rely on wireless connectivity and thus require enhanced wireless service.

US 2018/0092102 A1 relates to MU-MIMO group selection. Here, there is a greedy selection of devices based on a determined SINR, for example a determination and addition of streams/devices with certain SINRs. SINRs are updated depending on available beamforming reports and groups are selected based on the SINR and throughput.

US 2018/0176743 A1 describes a transmission system for phased determination of channel-correlation-based grouping metrices for multi-user transmissions.

SUMMARY

The object of the present invention is to provide transmitters and methods which mitigate or solve the drawbacks and problems of conventional solutions.

The above and further objectives are solved by the subject matter of the attached independent claims. Further advantageous embodiments can be found in the dependent claims.

The invention provides a solution for efficient grouping of streams simultaneously transmitted by an AP in one or more MU-MIMO and/or SU-MIMO transmissions to increase throughput of the transmitted streams. The disclosure further describes an efficient architecture for identifying high throughput groups and for arranging grouping table(s) listing the groups for fast and efficient access by a transmitter of the AP.

According to the present invention there is provided a transmitter of a wireless access point, AP, for optimizing stream grouping to enhance multi-user multi input multi output, MU-MIMO, transmissions, comprising a circuitry configured to conduct an iterative prolonged process and an iterative instantaneous process. The iterative prolonged process comprises receiving a plurality of beamforming reports each corresponding to a respective one of a plurality of streams transmitted simultaneously by the access point to one or more stations, computing an effective signal plus interference to noise ratio, ESINR, for each of the plurality of streams with respect to one or more other streams of the plurality of streams based on the plurality of beamforming reports, and updating a grouping table associated with each of the plurality of streams to include one or more groups of streams presenting best ESINR for the respective stream. The iterative instantaneous process comprises computing the ESINR for one or more of the plurality of streams using a single most recent beamforming report received for each stream, and updating one or more of the groups in the grouping table to include one or more additional streams presenting best ESINR. For each MU-MIMO transmission, the transmitter selects a best ESINR group from the updated grouping table of one of the plurality of streams.

Applying the two separate processes where the instantaneous process relies on the outcome and result of the prolonged processes may reduce both processes to linear complexity since each of the processes is applied to only a subset of streams comprising a limited number of streams. This may significantly reduce computing resources utilization and/or computing time required for the instantaneous process to identify best ESINR groups which are high throughput groups which may be thus executed immediately prior to one or more MU-MIMO transmissions and enable fast response time of the AP to one or more of the stations resulting in significantly reduced response time.

According to the present invention there is also provided a method of optimizing stream grouping for a transmitter of a wireless AP to enhance MU-MIMO transmission, comprising executing an iterative prolonged process and an iterative instantaneous process. The iterative prolonged process comprises receiving a plurality of beamforming reports each corresponding to a respective one of a plurality of streams transmitted simultaneously by the access point to one or more stations, computing an effective signal plus interference to noise ratio, ESINR, for each of the plurality of streams with respect to one or more other streams of the plurality of streams based on the plurality of beamforming reports, and updating a grouping table associated with each of the plurality of streams to include one or more groups of streams presenting best ESINR for the respective stream. The iterative instantaneous process comprises computing the ESINR for one or more of the plurality of streams using a single most recent beamforming report received for each stream, and updating one or more of the groups in the grouping table to include one or more additional streams presenting best ESINR. For each MU-MIMO transmission, the transmitter selects a best ESINR group from the updated grouping table of one of the plurality of streams.

In an embodiment, the iterative prolonged process and the iterative instantaneous process each comprise a plurality of iterations, in each of the plurality of iterations the ESINR is computed based on at least one newly received beamforming report received for at least one of the plurality of streams to continuously update the grouping table of at least some of the plurality of streams for use during a respective one of a plurality of MU-MIMO transmissions. Executing the prolonged process and the instantaneous process iteratively and continuously in a plurality may enable the AP to dynamically adapt to changing conditions in the wireless environment, for example, location change of one or more of the STAs, entry of one or more additional STAs into a coverage area of the AP, exit of one or more of the STAs out of the coverage area of the AP and/or the like.

According to the invention, the circuitry is configured to compute the ESINR for each of the plurality of streams by aggregating a plurality of signal plus interference to noise ratios, SINRs, each SINR is computed for a respective one of a plurality of tones of a spectrum of the respective stream. Aggregating the SINR computed for the plurality of tones per stream to compute an estimated ESINR of the stream may yield accurate estimation of the mutual interference across all tones of the stream.

According to the invention, the circuitry is configured to compute the SINR for each of the plurality of tones of the respective stream based on a degradation prediction matrix of a signal to noise ratio, SNR, of the respective tone with respect to at least one other stream of the plurality of streams included in a group with the respective stream. Computing the estimated SINR of each tone of the stream based on the degradation prediction matrix may significantly reduce the computing time and/or computing resources for the SINR computation.

In an embodiment, the circuitry is configured to iteratively compute the SINR for each of the plurality of tones of the respective stream for groups of increasing order comprising the respective stream and an increasing number of additional streams of the plurality of streams, the SINR computed for the respective tone with respect to a second group of a certain order is computed in a certain iteration based on the SINR computed for the respective tone during a preceding iteration with respect to a first group of a lower order, the second group comprising at least one additional stream compared to the first group. Computing the estimated SINR of each tone of on the degradation prediction matrix which is iteratively computed based on the degradation prediction matrix computed in a previous iteration may further reduce the computing time and/or computing resources for the SINR computation.

According to the invention, the circuitry is configured to compute the SINR for each tone of the respective stream using a feedback matrix reconstructed for the respective tone by decompressing compressed data contained in the feedback report of the respective stream. Computing the estimated SINR based on the reconstructed feedback matrix may significantly increase accuracy of the estimated SINR.

According to the invention, the circuitry is configured to compute the SINR for the respective tone in an iterative sequence, a single column of the reconstructed feedback matrix of the respective stream and a single column of the reconstructed feedback matrix of the at least one additional stream are used in each iteration of the iterative sequence, the single column selected in each iteration of the iterative sequence is a next best SNR column of the reconstructed feedback matrix.

In an embodiment, only a respective next best SNR column is stored in each iteration. Applying single column computation may significantly reduce the memory utilization during the SINR computation since at the completion of each column computation it may be discarded.

According to the invention, the circuitry is configured to compute the SINR for each of the plurality of tones of each the respective stream based on a diagonal vector of the degradation prediction matrix computed for the respective tone.

In an embodiment, the circuitry is configured to simultaneously reconstruct a feedback matrix for each of the plurality of tones of at least one additional stream of the plurality of streams included in a higher order group created for the respective stream while computing the SINR for a lower order group created for the respective stream, the lower order group does not include the at least one additional stream. Reconstruction of the feedback matrices and SINR computations may be conducted by separate and independent processing blocks which may simultaneously operate on different datasets thus reducing the overall ESINR computation time.

In an embodiment, the circuitry is configured to store a factorized SINR value of the SINR computed for each of the plurality of tones to convert the SINR which is computed in a linear domain from a linear scale to a logarithmic scale. Converting the SINR values to the logarithmic scale may be required for the ESINR computation and may be done earlier in the process in order to reduce the memory resources required for storing the SINR values since the logarithmic value of the SINR is smaller than the SINR linear value and may thus consume less memory space.

In an embodiment, the circuitry is configured to compute the ESINR for each of the plurality of streams for each of a plurality of Modulation and Coding Schemes (MCS) employed by the transmitter. In some transmission scenarios different MCSs may present different ESINR and hence different throughput. Exploring multiple MCSs to identify a best performing MCS may therefore further increase the throughput of the streams in the group.

In an embodiment, the circuitry is configured to associate the at least one group in the grouping table of each of the plurality of streams with a cumulative throughput computed for the at least one group by aggregating a throughput of the streams included in the at least one group. The cumulative throughput may serve as a metric for selecting which group of streams is best performing.

In an embodiment, the circuitry is configured to select during each iteration the group of streams for a respective MU-MINO transmission by rapidly traversing the grouping table sorted according to the cumulative throughput computed for the at least one group for each of the plurality of streams to identify a group having highest cumulative throughput. Arranging the groups in the grouping table according to their cumulative throughput may allow efficient traversing over the grouping table to rapidly identify the best performing group(s) (i.e., having highest cumulative throughput).

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1 is a flowchart of an exemplary process of optimizing streams grouping for MU-MIMO transmissions based on iterative Effective Signal to Interference and Noise Ratio (ESINR) computation, containing steps according to the present invention and some embodiments of the present invention;

FIG. 2 is a schematic illustration of an exemplary wireless environment deployed with an exemplary Access Point (AP) configured for optimizing streams grouping for MU-MIMO transmissions based on iterative ESINR computation, according to some embodiments of the present invention;

FIG. 3 is a block diagram of an exemplary architectural implementation of a transmitter of an AP configured for optimizing streams grouping for MU-MIMO transmissions based on iterative ESINR computation; and

FIG. 4 is a graph chart presenting SU-MIMO throughout performance of legacy schemes compared to the iterative ESINR based process of optimizing streams grouping for MU-MIMO transmissions, according to some embodiments of the present invention.

DETAILED DESCRIPTION

The present invention, in some embodiments thereof, relates to optimizing grouping for MU-MIMO and/or SU-MIMO transmissions and, more specifically, but not exclusively, to optimizing grouping for MU-MIMO and/or SU-MIMO transmissions based on a rapidly and efficiently computed estimation of mutual interference between streams in the groups.

MIMO technology, specifically MU-MIMO and SU-MIMO is wide spread and extensively deployed to provide improved wireless service, in particular increased throughput, reduced latency and/or the like. MIMO transmission includes simultaneous transmission of a plurality of transmission streams (users) from an access device, e.g. Access Point (AP) having multiple TX antennas to one or more stations (STAs), for example, a Smartphone, a computer, a wearable device, a vehicle having network connectivity and practically any network connected device or system comprising one or more RX antennas.

One of the main challenges and limitations concerning MIMO transmissions is throughput degradation due to mutual interference between the plurality of streams simultaneously transmitted by the AP. While MIMO transmissions are typically directional where the streams are pointed towards their target stations, there may still be significant mutual interference between simultaneously transmitted streams which may be expressed by the Signal to Interference and Noise Ratio (SINR) experienced by the streams.

Naturally, different streams may have different mutual interference due to one or more of a plurality of transmission parameters, for example, transmission direction, transmission power, Modulation and Coding Scheme (MCS), frequency spectrum and/or the like. Therefore, selecting the streams' grouping, i.e., selecting which streams to include in groups of simultaneously transmitted streams may have a major impact on the SINR experienced by the streams in the group.

Efficiently grouping the streams based on analyzing their mutual interference may significantly improve the throughput. The mutual interference (transmission degradation) may be computed and/or estimated by analyzing feedback information (channel information) received from the stations with respect to each of the transmitted streams. However, such analysis may be highly complex and time consuming since the complexity is exponentially increased with respect to increase in the number of streams (users) transmitted by the AP.

According to some embodiments of the present invention there are provided devices, systems and methods for optimizing the grouping of streams transmitted simultaneously by an AP to one or more STAs in order to improve the wireless service, in particular, to increase the transmission throughput by rapidly and efficiently identifying groups of streams which present lowest mutual interference.

Identifying, for each stream, the groups of streams which may present minimal mutual interference and may hence yield increased throughput while transmitted simultaneously in each of one or more MU-MIMO and/or SU-MIMO transmissions from the AP may be split into a plurality of concurrent processes which may rely on outcomes of one another. In particular, the groups are identified by estimating, for each of the streams, the mutual interference induced by the other streams in each group which is indicative of an estimated cumulative throughput of the respective group. The cumulative throughput may be the sum of the throughput of all steams included the respective group.

Specifically, the AP may execute a background prolonged process for estimating mutual interference for each stream included in one or more groups of certain orders where an order relates to a number of streams included in each group. The AP may further execute an instantaneous process which is typically executed prior to each of one or more MU-MIMO and/or SU-MIMO transmissions. The instantaneous process may compute, for one or more of the streams, the mutual interference for groups of higher order based on the outcomes and groups identified by the prolonged process. To further illustrate this, assuming the prolonged process computes the mutual interference for groups of a certain order, for example, pair groups comprising a certain stream (primary stream) and another one of the streams. The instantaneous process may compute the mutual interference for groups of higher orders, for example, triplet groups and/or quadrat groups each comprising the streams of one of the pair groups identified by the prolonged process and one or more additional streams respectively.

Since the instantaneous process does not initiate the groups' analysis and mutual interference computation from scratch but rather relies on partial outcomes (i.e., the lower order groups) provided by the prolonged process, the computation complexity of the process, in particular the instantaneous process is made significantly linear regardless of the number of streams transmitted by the AP. The instantaneous process may be therefore significantly shorter compared to the prolonged process and may be thus executed immediately prior to each of one or more of the MU-MIMO and/or SU-MIMO transmissions.

The prolonged process and the instantaneous process are iterative process which may be executed continuously in a plurality of iterations to dynamically adapt to changing conditions in the wireless environment, for example, location change of one or more of the STAs, entry of one or more additional STAs into a coverage area of the AP, exit of one or more of the STAs out of the coverage area of the AP and/or the like.

The mutual interference is estimated based on information extracted from beamforming reports received from the STAs and corresponding to each of the transmitted streams. The beamforming reports of each stream may typically include compressed data expressing angles and Signal to Noise Ratio (SNR) for each of a plurality of tones in a frequency spectrum of the respective stream.

The estimated mutual interference is therefore computed, for each stream, by computing an Effective SINR (ESINR) each group comprising the respective stream. The ESINR is an aggregation of a plurality of SINR values computed for all the tones of the respective stream with respect to the other streams included in the respective group based on feedback matrices reconstructed by decompressing the according to the compressed data extracted from the beamforming reports.

After computing the ESINR for one or more groups comprising each of the streams, one or more grouping tables of the AP may be updated to include (list) the groups. Moreover, an estimated cumulative throughput may be computed for each group and the groups may be sorted in the grouping table(s) according to their estimated cumulative throughput. This may allow the AP, in particular the transmitter of the AP to effacingly traverse the grouping table(s) and rapidly identify the best performing groups (highest cumulative throughput) in a significantly reduced time.

Evidently, the operations conducted by the prolonged process and the instantaneous process during each iteration are very similar and the two processes may therefore apply and/or utilize the same methods, techniques, algorithms and/or hardware architecture for identifying and constructing the groups of streams.

The architectural implementation of the prolonged process and the instantaneous process is highly optimized in order to significantly reduce the required computing resources (e.g. processing elements, storage and memory resources, etc.) and/or the computing time.

For example, reconstruction of the feedback matrices of the tones of the streams requires decompression of a plurality of compressed angles extracted from the beamforming report of each of the tones. According to some embodiments of the present invention, the plurality of compressed angles of each tone may be simultaneously computed thus significantly reducing the computing time, i.e. reducing a number of clock cycles required to decompress. The decompression further entails multiple matrix operations, specifically complex matrix multiplications which may be heavy time and/or resource consuming. According to some embodiments of the present invention, taking advantage of the pre-defined format of the feedback matrix, the decompression may be done on vector basis for a single vector of the feedback matrix at a time thus significantly reducing computing and/or memory resources required for processing and/or storing the results of the matrix operations.

In another example, the SINR degradation estimation for each tone (or a subset of tones) of each of the streams may be computed based on a degradation prediction matrix computed for each group comprising the respective stream. Computing the degradation prediction matrix for a plurality of groups of multiple orders for each stream may naturally consume major computing time and/or computing resource. According to some embodiments of the present invention, the degradation prediction matrix may be computed iteratively for each stream such that the degradation prediction matrix computed for a certain order group (e.g. order n) comprising n streams may relay on the degradation prediction matrix computed in a previous iteration for a group of a preceding order (i.e., order n-1) comprising n-1 streams. This may significantly reduce computing resources, computing time and/or memory resources since the computation complexity is significantly reduced and there is no need to store the degradation prediction matrices for the lower order groups but rather only the degradation prediction matrix computed for the highest order group.

The multi process ESINR estimation process and architecture for grouping streams for MU-MIMO and/or SU-MIMO transmissions may therefore present significant advantages and benefits compared to currently existing methods and systems for grouping streams.

First, by applying multiple processes, in particular, the background prolonged process and the prior to transmission instantaneous process which relies on the outcome and results of the prolonged process, the processes, specifically the instantaneous process may be reduced to linear complexity regardless of the number of streams transmitted by the AP compared to the exponential complexity which may be demonstrated by the existing methods.

Moreover, by rapidly and efficiently constructing high throughput groups for each stream immediately prior to a MU-MIMO and/or SU-MIMO transmission, the transmitter may select a best performing (i.e., highest cumulative throughput group) comprising certain one or more streams which must be transmitted in the upcoming (next) MU-MIMO and/or SU-MIMO transmission, for example, in response to a request from one or more STAs. This may significantly increase the throughput performance of the transmitted streams while maintaining significantly low latency in responding to STA(s).

Furthermore, the efficient and resource economical architectural implementation of the grouping mechanisms and process may significantly reduce complexity of the AP transmitter. This may significantly reduce design costs, production costs and/or a failure rate of the transmitter which consequently reduce the cost of the AP while supporting improved wireless service.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

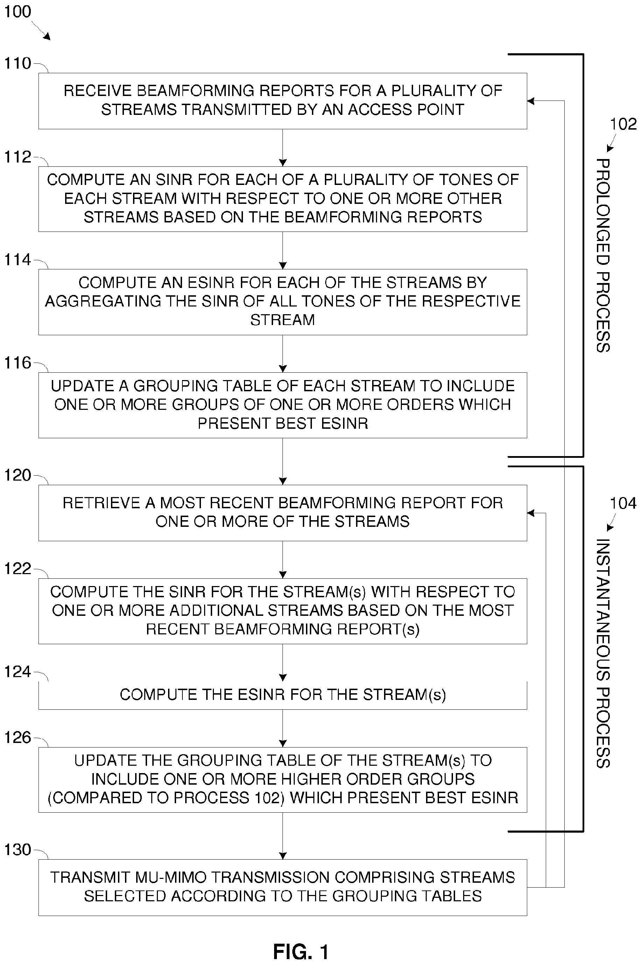

Referring now to the drawings, FIG. 1 is a flowchart of an exemplary process of optimizing streams grouping for MU-MIMO transmissions based on iterative ESINR computation, according to some embodiments of the present invention.

An exemplary process 100 comprising a prolonged process 102 and an instantaneous process 104 may be executed by a transmitter of a wireless apparatus, in particular an AP comprising a plurality of transmit (TX) antennas configured for MU-MIMO (and SU-MIMO) transmission, for optimizing grouping of transmission streams to one or more wireless stations each having one or more receive (RX) antennas. The wireless AP and station(s) may apply the MU-MIMO and/or SU-MIMO transmission according to one or more wireless network protocols, for example, IEEE 802.11 (e.g. Wi-Fi), cellular communication and/or the like.

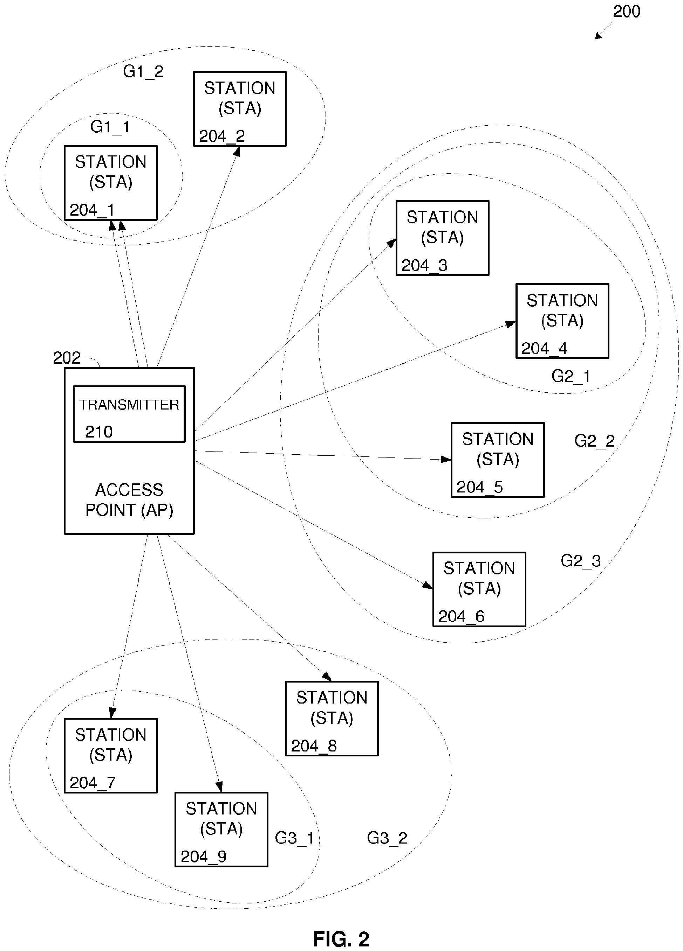

Reference is also made to FIG. 2, which is a schematic illustration of an exemplary wireless environment deployed with an exemplary AP configured for optimizing streams grouping for MU-MIMO transmissions based on iterative ESINR computation, according to some embodiments of the present invention. An exemplary wireless environment 200 deployed to operate according to one or wireless network protocols, for example, IEEE 802.11 (e.g. Wi-Fi), cellular communication and/or the like may typically include one or more APs 202 executing a process such as the process 100 and one or more stations (STAs) 204.

The AP 202, for example, an access device, a router, a cellular cell (base station) and/or the like comprising a plurality of TX antennas may comprise a wireless transmitter 210, specifically a wireless transmitter configured for MU-MIMO and SU-MIMO transmission to simultaneously transmit a plurality of streams to one or more of the plurality of STAs 204. The STAs 204 may include, for example, a Smartphone, a computer, a wearable device, a vehicle having network connectivity and practically any network connected device or system comprising one or more RX antennas.

The AP 202 may include one or more circuitries, for example, a circuit, a component, an Integrated Circuit (IC), an Application Specific Integrated Circuit (ASIC), a Field Programmable Gate Array (FPGA), a Digital Signals Processor (DSP) and/or the like. The AP 202 may further include one or more processors capable of executing one or more software modules, for example, a process, a script, an application, an agent, a utility, a tool and/or the like executed by one or more processors of the AP 202 each comprising a plurality of program instructions stored in a non-transitory medium of the AP 202. The transmitter 210 may be implemented, utilized and/or facilitated by one or more of the hardware circuitries, one or more software modules and/or a combination thereof. For example, the AP 202 may include a MAC (Media Access Controller) and a PHY (Physical Layer) to utilize the transmitter 210. The transmitter 210 may further include a Zero-Forcing (ZF) pre-coder to ensure no correlation between streams simultaneously transmitted from the multiple antennas of the AP 202.

Each of the STAs 204 may include one or more RX antennas. While STAs 204 comprising a single RX antenna (e.g. STA 204_2, STA 204_3, etc.) may receive a single stream at any given time, STAs 204 comprising multiple RX antennas (e.g. STA 204_1) may be configured to simultaneously receive a plurality (two or more) of streams during MU-MIMO and/or SU-MIMO transmission from the AP 202.

During each MU-MIMO and/or SU-MIMO transmission, the transmitter 210 of the AP 202 may transmit group comprising a plurality of streams transmitted simultaneously to one of a plurality of groups each comprising one or more of the STAs 204.

For example, a group G1_1 may include two streams simultaneously transmitted to a single STA 204 comprising two RX antennas, for example, the STA 204_1 such when transmitting the group G1_1, the transmitter 210 simultaneously transmits two streams to the STA 204_1. In another example, a group G1_2 may include three streams simultaneously transmitted to two STAs 204, specifically the STA 204_1 comprising two RX antennas and the STA 204_2 comprising a single RX antenna such that when transmitting the group G1_2, the transmitter 210 simultaneously transmits three streams to the two STAs 204_1 and 204_2.

In another example, a group G2_1 may include two streams simultaneously transmitted to two STAs 204, specifically the STA 204_3 and the STA 204_4 each comprising a single RX antenna, such that when transmitting the group G2_2, the transmitter 210 simultaneously transmits two streams to the two STAs 204_3 and 204_4. In another example, a group G2_2 may include three streams simultaneously transmitted to three STAs 204, specifically the STA 204_3, the STA 204_4 and the STA 204_5 each comprising a single RX antenna, such that when transmitting the group G2_2, the transmitter 210 simultaneously transmits three streams to the three STAs 204_3, 204_4 and 204_5. In another example, a group G2_3 may include four streams simultaneously transmitted to four STAs 204, specifically the STA 204_3, the STA 204_4, the STA 204_5 and the STA 204_6 each comprising a single RX antenna, such that when transmitting the group G2_3, the transmitter 210 simultaneously transmits four streams to the four STAs 204_3, 204_4, 204_5 and 204_6.

In another example, a group G3_1 may include two streams simultaneously transmitted to two STAs 204, specifically the STA 204_7 and the STA 204_9 each comprising a single RX antenna, such that when transmitting the group G3_1, the transmitter 210 simultaneously transmits two streams to the two STAs 204_7 and 204_9. In another example, a group G2_2 may include three streams simultaneously transmitted to three STAs 204, specifically the STA 204_7, the STA 204_8 and the STA 204_9 each comprising a single RX antenna, such that when transmitting the group G3_2, the transmitter 210 simultaneously transmits three streams to the three STAs 204_7, 204_8 and 204_9.

The process 100 comprising the prolonged process 102 and the instantaneous process 104 which are both iterative processes comprising a plurality of iterations may be executed by the transmitter 210 for optimizing grouping of streams for MU-MIMO and/or SU-MIMO transmissions. The transmitter 210 may execute the process 100 to construct groups of streams that may significantly improve the streams' throughput, specifically the cumulative throughput which is the combined throughput of all streams.

The operations conducted during each of the iterations are very similar for both the prolonged process 102 and the instantaneous process 104 which may both apply the same methods, algorithms and hardware architecture for identifying and constructing the groups of streams.

The prolonged process 102 is executed as a background process which may extend over a longer time period compared to the instantaneous process 104 to optimize the grouping for MU-MIMO and/or SU-MIMO transmissions by constructing groups of streams based on mutual interference between the simultaneously transmitted streams. The instantaneous process 104 is a significantly shorter process which applies the same computing process as the prolonged process 102 but may rely on an outcome of the prolonged process 102 to further optimize the grouping created and/or updated by the prolonged process 102. The instantaneous process 104 may thus execute immediately prior to each of one or more MU-MIMO and/or SU-MIMO transmissions.

In particular, the prolonged process 102 is directed to create groups of streams of a certain first order, for example, pairs, triplets, quadrats and/or higher orders. The instantaneous process 104 is directed to compute further optimize the grouping by including one or more additional streams in the groups created by the prolonged process 102. For example, the instantaneous process 104 may construct a triplet group comprising three streams which is based on a pair group comprising two streams constructed by the prolonged process 102. In another example, the instantaneous process 104 may construct a quadrat group comprising four streams which is based on a triplet group comprising three streams constructed by the prolonged process 102. In another example, the instantaneous process 104 may construct a sextet group comprising six streams which is based on a quadrat group comprising four streams constructed by the prolonged process 102.

Constructing the groups based on the mutual inference computation and/or prediction as done by legacy methods and systems may be significantly complex and the computing complexity may increase exponentially with respect to the number of streams in the group. However, since the instantaneous process 104 relies on the outcome of the prolonged process 102, the instantaneous process 104 may be a linear complexity process which may consume significantly reduced computation resources and/or computation time compared to the legacy group construction.

As shown at 110, the prolonged process 102 starts with the transmitter 310 of the AP 302 (beamformer) receiving a plurality of beamforming reports each corresponding to a respective one of a plurality of streams transmitted to one or more STAs 204 (beamformees).

Each beamforming report, as known in the art, comprises compressed data encoding information relating to the corresponding stream, for example, a feedback (precoding) matrix of the corresponding stream comprising angles, SNR data and/or the like computed by the respective STA 204, for example, by applying Singular Value Decomposition (SVD) to a channel matrix H calculated for the corresponding stream. The beamforming reports are typically arranged to provide the compressed data for each of a plurality of tones in a frequency spectrum of the corresponding stream.

The STA 204 may create the beamforming report which is representative set comprising values, for example, compressed angles and SNR value(s) by applying a plurality of matrix operations to, for example, the feedback matrix. Instead of sending the raw feedback matrix, the STA 204 may therefore transmit the beamforming report which is significantly smaller than the feedback matrix and thus consumes significantly less bandwidth and/or presents a significantly reduced latency due to its shorter transmission time.

The transmitter 210 may store the received beamforming reports in its local memory. Moreover, the beamforming reports may be sorted in the memory according to the SNR associated with of the tones, for example, in an ascending SNR order, a descending SNR order and/or the like.

As shown at 112, the transmitter 210 computes the SINR for each of the streams with respect to one or more of the other streams based on the data extracted from the beamforming reports received for the streams. In particular, the transmitter 210 computes the SINR for each tone of the respective streams with respect to one or more of the other streams. Optionally, the transmitter 210 computes the SINR for a subset of the tones of the respective streams with respect to one or more of the other streams, for example, every 2nd tone, every 4th tone and/or the like.

The transmitter 210 first reconstructs a feedback matrix $v$ for each of the tones by decompressing the compressed data contained in the feedback report of the respective stream. The transmitter 210 may apply an innovative approach for reconstructing the feedback matrices of the tones which takes advantage of the pre-defined format of the resulting feedback matrix by simultaneously decompressing all tones of the stream on vector basis.

For example, assuming the MIMO system is an 8x8 system, each beamforming report may comprise 56 compressed angles per tone of the corresponding stream. Legacy methods, systems and/or architectures may typically decompress the angles using 35 Complex Matrix Multiplication (C-MMult) stages to reconstruct the feedback matrix $v$ per tone. The vector based decompression on the other hand uses all 56 angles at once thus computing a partial result in 2-3 clock cycles compared to 64 clock cycles as required by the legacy approach assuming three multiplications per cycle and avoiding the actual C-MMult which may each one execute in 8 clock cycles. Therefore, in total the decompression process to reconstruct the feedback matrix $v$ for a subset of tones comprising every 4th tone may be executed in ~15 cycles compared to 35 x 8 = 280 clock cycles in the legacy approach.

In case the transmitter 210 computes the SINR for the subset of the tones of the respective stream with respect to one or more of the other streams, the transmitter may reconstruct the feedback matrix $v$ only for tones of the subset.

The transmitter 210 computes the SINR for each tone of each stream based on a degradation prediction matrix B of the SNR of the respective tone of the respective stream with respect to one or more of the other streams included in a group with the respective stream.

In the expression $U_n = [U_{n-1}u_n]$, $u_n$ represents a singular vector related to stream $n$ in a specific tone (tone index is omitted) which is added to the group. The reconstructed feedback matrix $v$ of the stream $n$ may be defined by $v = U_{n-1}^H u_n$ where H is the channel matrix of the $n^{th}$ stream. A scalar variable $g$ is defined by $g = 1 - v^H B_{n-1}^{-1} v$.

The degradation prediction (computation) matrix $B_n$ used by the transmitter 210 for computing an estimated SINR for each stream with respect each other stream included in a certain group of order $n$, i.e., a group comprising $n$ streams may be defined as expressed in equation 1 below.

Equation 1:

$$B_n \stackrel{\text{def}}{=} U_n^H \cdot U_n$$

Moreover, the transmitter 210 may compute the SINR for the respective tone of the respective stream with respect to other streams included in groups of increasing order based on the degradation prediction matrices B which are computed iteratively for the increasing order groups selected for the respective tone. The increasing order groups comprise the respective stream and an increasing number of additional streams selected from the other streams transmitted to the STA(s) 204. This means that the transmitter 210 may compute the SINR for a (second) group of order $n$ comprising $n$ streams based on the degradation prediction matrix $B_n$ which is computed based on the degradation prediction matrix $B_{n-1}$ computed in a preceding iteration for a (first) group of a preceding order, i.e., a group comprising $n - 1$ streams. The $n$ streams in the second group of order $n$ include the $n - 1$ streams in the first group of order $n - 1$ and another (additional) stream.

As such, in each iteration, the transmitter 210 computes the degradation prediction matrix $B_n$ of the (second) group of order $n$ based on the degradation prediction matrix $B_{n-1}$ computed in a preceding iteration for the (first) group of a preceding order, i.e., a group comprising $n - 1$ streams. In particular the transmitter 210 may compute iteratively an inverse degradation prediction matrix $B_n^{-1}$ of the certain group based on the inverse degradation prediction matrix $B_{n-1}^{-1}$ of the preceding order group according to equation 2 below.

Equation 2:

$$B_n^{-1} = \begin{bmatrix} B_{n-1}^{-1} + \dfrac{B_{n-1}^{-1} v v^H B_{n-1}^{-1}}{g} & -\dfrac{B_{n-1}^{-1} v}{g} \\ -\dfrac{v^H B_{n-1}^{-1}}{g} & \dfrac{1}{g} \end{bmatrix}$$

The transmitter 210 computes the SINR for the respective tone with respect to the other streams included in the group of order $n$ (comprising $n$ streams) based on a diagonal vector $a_n$ of the inverse computation matrix $B_n^{-1}$ expressed by $a_n = diag(B_n^{-1})$ according to equation 3 below.

Equation 3:

$$SINR_{i,k} = \frac{SNR_{i,k}}{a_n(i,i)}$$

The transmitter 210 computes the SINR based on the degradation prediction matrix $B_n$ using a single column of the reconstructed feedback matrix *v* of the respective stream and a single column of the reconstructed feedback matrix *v* of each of one or more other (additional) streams included in the group constructed in the current iteration. For example, in each iteration of the iterative computation sequence, the transmitter 210 may select a next best SNR column from the reconstructed feedback matrix *v*.

As the transmitter 210 uses single columns of the streams included in the group constructed in each iteration of the iterative computation sequence, only the currently used single columns may be stored in the memory of the transmitter 210 thus significantly reducing the storage capacity required for computing the SINR.

Optionally, the transmitter 210 reconstructs the feedback matrix *v* for each of the plurality of tones of one or more additional streams to be included in a higher order group created for one or more of the streams while computing the SINR for a lower order group created for the respective stream(s) which does not include the additional stream(s). Expressing it in terms of the n streams, the transmitter 210 may reconstruct (compute) the feedback matrix v for each tone of the stream *n* by decompressing the compressed data contained in the corresponding beamforming report while computing the SINR for the tones of the respective stream for a group comprising $n - 1$ streams, stream *n* not included.

This simultaneous execution and computation is feasible as the architecture employed by the transmitter 210 may include separate modules for executing each of the two processes, namely reconstructing the feedback matrix v for each tone of the stream *n* and the SINR computation for the group of order $n - 1$ based on the degradation prediction matrix $B_{n-1}$.

The transmitter 210 may further store a factorized SINR value of the SINR computed for each of the plurality of tones of each stream to convert the SINR which is computed in a linear domain from a linear scale to a logarithmic scale.

As shown at 114, the transmitter 210 computes an Effective SINR (ESINR) for each of the streams with respect to the other streams in each of the groups comprising the respective stream by aggregating the SINRs (SINR values) computed for each of the plurality of tones of the respective stream.

The transmitter may optionally compute the ESINR for each of the streams according to one or more Modulation and Coding Schemes (MCS) (designated $\beta$ herein after), for example, BPSK, QPSK, 16-QAM, 64-QAM and/or the like which may be applied by the transmitter 210.

The transmitter 210 may compute the ESINR for each of the streams according to equation 4 below.

Equation 4:

$$ESINR = 10 \cdot log_{10} \left\{ -\beta \cdot ln \left[ \frac{1}{N_{SS} \cdot N_{FFT}} \sum_{i}^{N_{SS}} \sum_{k}^{N_{FFT}} exp \left( -\frac{SINR_{i,k}}{\beta} \right) \right] \right\}$$

Optionally, while computing the SINR values for the tones of the respective stream (step 112), the transmitter may also search and store a minimal SINR value among the SINR values of all tones. The transmitter 210 may subtract the stored minimal SINR from all SINR values prior to computing the ESINR in order to normalize the SINR values and achieve a wider range for computing the ESINR, which aggregates the SINR values of the tones, more accurately. After computing the ESINR, the transmitter 210 apply the minimal SINR to the computed ESINR to restore the ESINR to its correct range.

As shown at 116, the transmitter 210 updates one or more grouping tables comprising one or more groups for each of the streams, i.e. each of the streams is include in one or more of the groups. The transmitter 210 may update the grouping table(s) according to the ESINR computed by the transmitter 210 for each of the groups. The groups identified for each of the streams may be stored in the local memory of the transmitter 210 in a single unified grouping table and/or in a plurality of dedicated grouping tables each associated with one or more of the streams.

The transmitter 210 may further compute a cumulative throughput (goodput) for each group by aggregating the throughput estimated for each of the streams included in the respective group. The transmitter 210 may sort the grouping tables in the memory according to the cumulative throughput of the groups, for example, in ascending order, in descending order and/or the like. Sorting the groups according to the cumulative throughput may significantly reduce the access time of the MAC to retrieve the best performing group thus significantly expediting the grouping process and reducing latency of transmission.

Table 1 below presents an exemplary grouping table created for a best SNR stream of a certain STA 204, designated primary stream, in a wireless environment such as the wireless environment 200 utilizing a plurality of streams for transmitting data to N STAs 204, for example, 40 each having one or more RX antennas such that each of the STAs 204 may receive one or more streams.

In order to evaluate possible groups for the primary stream and identify best performing groups, the transmitter 210 may select a plurality of candidate streams to construct groups of different orders for the primary stream. The transmitter 210 may further compute the cumulative throughput for each of the evaluated groups which aggregates the throughputs of all streams included in the respective groups. The transmitter 210 may then identify and select the best performing groups among the evaluated groups.

The transmitter 210 may evaluate possible streams grouping for the primary stream with each of the N STAs 204. However, in order to reduce computation complexity and/or computation resources, the transmitter 210 may typically evaluate possible grouping for the primary stream with only a subset of M candidate STAs 204, for example, 12 STAs 204.

Moreover, the transmitter 210 may apply one or more techniques, methodologies and/or algorithms for selecting the streams contained in each of the evaluated groups, in particular in case one or more of the STAs 204 comprise multiple RX antennas and hence capable of receiving multiple streams. For lower order groups, for example, pair, triplet, etc. evaluated for the primary stream, the transmitter 210 may initially select the best SNR stream of each candidate STA 204 of the subset M defined for the primary stream. For higher order groups the transmitter 210 may select the streams based on the lower order groups and add one or more additional streams which may include a next best SNR stream of one or more candidate STAs 204 of the subset M which are not included in the lower order group.

For example, assuming the primary stream is the best SNR stream of STA 204 30 and the subset *M* defined for the STA 204 30 includes STAs 204 1, 2, 3, 4 and 5. The transmitter 210 may construct pair groups each comprising the primary stream and the best SNR stream of a respective one of the STAs 204 1, 2, 3, 4 and 5 and evaluate the cumulative performance of these pair groups. In a the next iteration, the transmitter 210 may construct and evaluate one or more triplet groups each comprising the streams of one of the pair groups, in particular, high preforming pair group(s) with addition of one stream, for example, a pair group comprising the primary stream and the best SNR stream of the STA 204 1. The additional stream selected by the transmitter 210 for an evaluated triplet group may be the next best SNR stream of the STA 204 30, the next best SNR stream of the STA 204 1 or the best SNR stream of one of the other STAs 204, for example STAs 2, 3, 4 or 5.

The transmitter 210 may update the grouping table of the primary stream to include the cumulative throughput of each evaluated group, in particular the groups having highest cumulative throughput. However, in order to reduce computation complexity and/or computation resources, the transmitter 210 may compute the cumulative throughput estimated for groups of relatively low order, for example, pair groups comprising the primary stream and the best SNR stream of one or more of the other STAs 204. The transmitter 210 may further expand these lower order groups (e.g. pair groups) to include additional streams. This implementation may serve to establish a base grouping scheme for transmitting data to any of the STAs 204 as required and further transmitting additional streams included in the group(s) corresponding to the required STA 204 and presenting high estimated cumulative throughput.

The transmitter 210 may create a respective table such as table 1 for each of the STAs 204 such that in each table, the primary stream is the best SNR stream of a respective STA 204.

Table 1:

| Pair | Triplet | Quadrat | Cumulative Throughput (Mbps) of the pair |
|------|---------|---------|------------------------------------------|
| 1 | 1, 2 | 1, 2, 3 | 200 |
| 7 | 0 | 0 | 150 |
| 8 | 8,10 | 0 | 130 |
| | | | |
| 35 | 35, 36 | 35, 36, 40 | 90 |
| 38 | 38,39 | 0 | 70 |

As seen in table 1, the exemplary grouping table created by the transmitter 210 for the primary stream, for example, the best SNR stream of the STA 204 30 may include a plurality of groups of different orders presenting various cumulative throughput. The cumulative throughput column presents the estimated cumulative throughput of the pair group defined in the respective row.

For example, a pair group comprising the primary stream and the best SNR stream of the STA 204 1 presents best cumulative throughput of 200 Mbps. The ESINR computed for a triplet group constructed based on the pair group which includes the best SNR stream of the STA 204 2 in addition to the streams of the pair group may not degrade the ESINR of the pair group and hence may not degrade the cumulative throughput of the pair group. Also, the ESINR computed for a quadrat group constructed based on the triplet group which includes the best SNR stream of the STA 204 3 in addition to the streams of the triplet group may not degrade the ESINR of the pair group and hence may not degrade the cumulative throughput of the pair group. As such, in case the transmitter 210 needs to transmit data to the STA 204 30 (which is the primary stream for the exemplary table 1), the transmitter 210 may use the pair group, the triplet group or the quadrat group according to further required transmissions to the other STAs 204, in particular STAs 204 2 and/or 3.

In another example, a pair group comprising the primary stream and the best SNR stream of STA 204 7 presents the next best cumulative throughput of 150 Mbps. However, as seen, higher order groups comprising the streams of the pair group, i.e., the primary stream and the best SNR stream of the STA 204 7 are invalid options since they may significantly degrade the ESINR and hence degrade the cumulative throughput of the pair group and are thus discarded (expressed by "0" in the table).

In another example, a pair group comprising the primary stream and the best SNR stream of the STA 204 8 presents next best cumulative throughput of 130 Mbps. The ESINR computed for a triplet group constructed based on the pair group which includes the best SNR stream of the STA 204 10 in addition to the streams of the pair group may not degrade the ESINR of the pair group and hence may not degrade the cumulative throughput of the pair group. Higher order groups comprising the streams of the pair group, i.e., the primary stream and the best SNR streams of the STA 204 8 are invalid and are thus discarded. As such, in case the transmitter 210 needs to transmit data to the STA 204 30 (which is the primary stream for the exemplary table 1), the transmitter 210 may use the pair group and/or the triplet group according to further required transmissions to the other STAs 204, in particular STAs 204 8 and/or 10.

In another example, a pair group comprising the primary stream and the best SNR stream of the STA 204 35 presents cumulative throughput of 90 Mbps. The ESINR computed for a triplet group constructed based on the pair group which includes the best SNR stream of the STA 204 36 in addition to the stream of the pair group may not degrade the ESINR of the pair group and hence may not degrade the cumulative throughput of the pair group. Also, the ESINR computed for a quadrat group constructed based on the triplet group which includes the best SNR stream of the STA 204 40 in addition to the streams of the triplet group may not degrade the ESINR of the pair group and hence may not degrade the cumulative throughput of the pair group. As such, in case the transmitter 210 needs to transmit data to the STA 204 30 (which is the primary stream for the exemplary table 1), the transmitter 210 may use the pair group, the triplet group or the quadrat group according to further required transmissions to the other STAs 204, in particular STAs 204 35, 36 and/or 40.

In another example, a pair group comprising the primary stream and the best SNR stream of the STA 204 38 presents cumulative throughput of 70 Mbps. The ESINR computed for a triplet group constructed based on the pair group which includes the best SNR stream of the STA 204 39 in addition to the streams of the pair group may not degrade the ESINR of the pair group and hence may not degrade the cumulative throughput of the pair group. Higher order groups comprising the streams of the pair group, i.e., the primary stream and the best SNR streams of the STA 204 38 are invalid and are thus discarded. As such, in case the transmitter 210 needs to transmit data to the STA 204 30 (which is the primary stream for the exemplary table 1), the transmitter 210 may use the pair group and/or the triplet group according to further required transmissions to the other STAs 204, in particular STAs 204 38 and/or 39.

As described herein before, the transmitter 210 may create and sort the grouping table(s) for each of the plurality of streams corresponding to the plurality of STAs 204, in particular for the best SNR stream of each of the STAs 204 which in the exemplary wireless environment reflected in Table 1 may include 40 STAs 204.

As shown at 120, the instantaneous process 104 starts with the transmitter 210 retrieving one or more most recently received beamforming reports corresponding to one or more of the streams. The most recently received beamforming report(s) of one or more of the streams may be newly received such that they are not used during the current iteration of the prolonged process 102. However, it is possible and typically the case that during the instantaneous process 104 the transmitter 210 uses the same beamforming report(s) which were used during the prolonged process 102.

As shown at 122, the transmitter 210 computes the SINR for one or more of the streams according to equations 2 and 3 as described in step 112. However, as this step 122 is part of the instantaneous process 104, the transmitter 210 uses the outcome of the prolonged process 102, i.e. the groups identified in the prolonged process 102 as a starting point to compute the SINR for higher order groups comprising additional streams compared to groups identified in the prolonged process 102. As result, the instantaneous process 104 is a linear process which may consume significantly less computing resources and/or computing time.

As shown at 124, the transmitter 210 computes the ESINR for each of the streams with respect to the other streams in each of the groups comprising the respective stream by aggregating the SINRs computed for the plurality of tones of the respective stream according to equation 4 as described in step 114. The transmitter 210 may therefore identify one or more higher order groups comprising the streams included in respective groups identified during the prolonged process 102 and one or more additional streams.

As shown at 126, the transmitter 210 updates one or more of the grouping table(s) to include the identified higher order group(s) as described in step 116.

The transmitter 210 may further compute the cumulative throughput for each of the identified higher order group(s) and may sort the grouping table(s) according to the cumulative throughput computed for the groups as described in step 116.

As shown at 130, the transmitter 210, specifically the MAC may access the grouping table(s) to select the group of streams to be transmitted in each of one or more of a plurality of MU-MIMO and/or SU-MIMO transmissions.

Since the groups are sorted in the grouping table(s) according to their cumulative throughput, the MAC may rapidly traverse the sorted grouping table(s) to identify a group having highest cumulative throughput. Moreover, as the grouping table(s) is arranged per stream, the MAC may identify the highest cumulative throughput group for each stream that may need to be transmitted during the coming MU-MIMO and/or SU-MIMO transmission. This means that assuming a certain stream needs to be transmitted in the next coming MU-MIMO and/or SU-MIMO transmission, the MAC may access the grouping table(s) comprising the groups identified for the certain stream. This may significantly reduce the access time of the MAC to retrieve the best performing group for each stream thus significantly expediting the grouping process and reducing latency of the MU-MIMO and/or SU-MIMO transmission.

The process 100 is iterative to dynamically support continuous MU-MIMO and/or SU-MIMO transmissions. Following one or more of the MU-MIMO and/or SU-MIMO transmissions one or more new beamforming reports corresponding to one or more of the transmitted streams may be received. The newly received beamforming reports may indicate changes in distribution of the STAs 204 which may require changes in the grouping of streams transmitted by the transmitter 210 to adjust the service of the AP 202 to the STAs 204. Such changes indicated by the beamforming reports may include, for example, a location change of one or more of the STAs 204, an entry of one or more additional STAs 204 into a coverage area of the AP 202, an exit of one or more of the STAs 204 out of the coverage area of the AP 202 and/or the like.

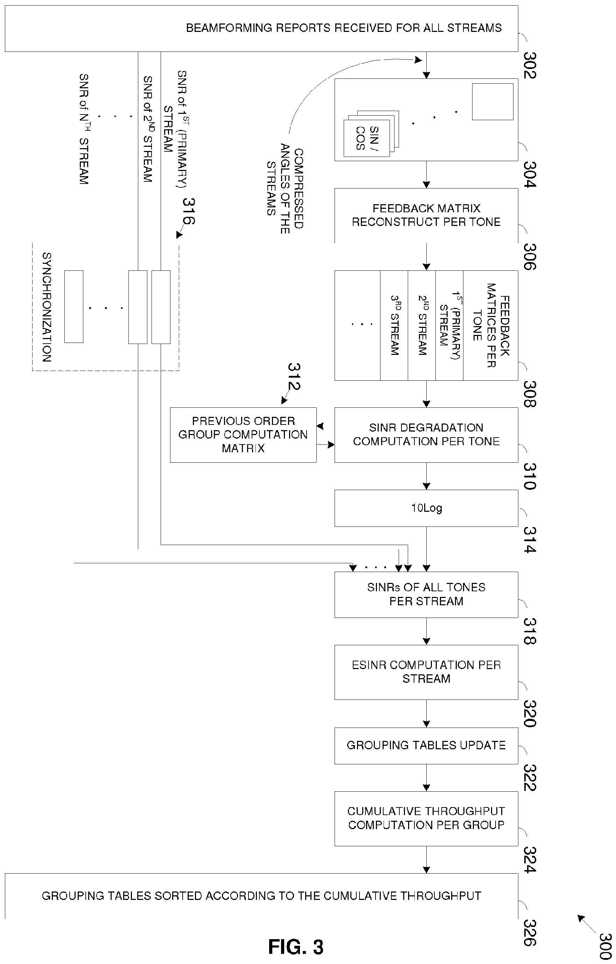

Reference is now made to FIG. 3, which is a block diagram of an exemplary architectural implementation of a transmitter of an AP configured for optimizing streams grouping for MU-MIMO transmissions based on iterative ESINR computation, according to some embodiments of the present invention. An exemplary architecture 300 may be implemented in a transmitter such as the transmitter 210 of an AP such as the AP 202 for executing a process such as the process 100 to optimize grouping of streams transmitted in one or more MU-MIMO and/or SU-MIMO transmissions to one or more STAs such as the STAs 204. The architecture 300 comprises a plurality of processing blocks which as described herein before may be implemented, utilized and/or applied using one or more software modules, hardware elements and/or a combination thereof.

The transmitter 210 may apply the same architecture 300 for executing both a prolonged process such as the prolonged process 102 and an instantaneous process such as the instantaneous process 104 which together constitute the process 100. In each of their iterations, the prolonged process 102 and/or the instantaneous process 104 using the architecture 300 may be repeated multiple times to evaluate grouping for multiple STAs 204 and generate a plurality of grouping tables for the best SNR stream of each of the STAs 204, as such in each execution repetition, the primary stream for which the respective grouping table is created is the best SNR stream of a different one of the STAs 204.

The architecture 300 is demonstrated herein after for an exemplary grouping scheme applied for an $8 \times 8$ MIMO system in which the transmitter 210 executes the prolonged process 102 to identify groups constructed of up to 4 streams which present best ESINR and updaters the grouping table(s) accordingly as described in steps 110 through 116. The transmitter 210 then executes the instantaneous process 104 to identify groups constructed of up to 6 streams based on the groups identified during the prolonged process 102 by computing the ESINR for groups comprising two additional streams compared to the groups identified by the during the prolonged process 102. This grouping scheme is exemplary and should not be construed as limiting since it may be applied to a plurality of other grouping schemes such that the number of streams explored for the grouping may vary for both the prolonged process 102 and/or for the instantaneous process 104.

As seen, the plurality of beamforming reports received from one of the STAs 204 and corresponding to a certain stream designated primary stream (primary user) may be stored in a local memory 302 of the AP 202 which is used and accessible to the transmitter 210 as described in step 110 for the prolonged process 102 and in step 120 for the instantaneous process 104. Assuming the $8 \times 8$ MIMO employing 160MHz bandwidth MU-MIMO and/or SU-MIMO transmissions comprising 16 streams to a plurality of STAs 204, 400 KB need to be allocated in the memory 302 for storing the received beamforming reports.

The transmitter 210 may process the compressed data extracted from the beamforming reports to reconstruct the feedback matrices $v$ per tone for each of one or more of the streams corresponding to the received beamforming reports as described in step 112 for the prolonged process 102 and in step 122 for the instantaneous process 104.

In particular, the transmitter 210 may compute $sin()$ and $cos()$ values for the compressed angles extracted from the beamforming reports. The transmitter 210 may utilize an array 304 of processing blocks to simultaneously process multiple compressed angles and thus significantly reduce the processing time. As the exemplary MIMO system is 8x8, each of the beamforming reports may include 56 compressed angles and the array 304 may therefore include, for example, 28 processing blocks thus processing the 56 compressed angles in two clock cycles.

The transmitter 210 may then apply a processing block 306 to decompress the compressed angles based on the computed *sin*() and *cos*() values to reconstruct the feedback matrix *v* per tone of the respective stream as described in step 112 for the prolonged process 102 and in step 122 for the instantaneous process 104. Optionally, the transmitter 210 computes the SINR for a subset of the tones of the respective stream and in such case the transmitter may reconstruct the feedback matrix *v* only for tones of the subset. The decompression for a subset of every 4th tone in a 56 compressed angle scheme may require $35 \times 8 \times 8$ C-MMult operations.

The processing block 306 may be configured to apply the vector based reconstruction of the feedback matrix *v* for each tone or for each of the subset of tones of the respective stream. The transmitter 210 may thus apply the processing block 306 to process all 56 angles at once thus computing a partial result in 2-3 clock cycles. In total the decompression process to reconstruct the feedback matrix *v* for the subset of tones may be executed in ~15 cycles.

The transmitter 210 may store the reconstructed feedback matrix *v* of the primary stream in a memory 308 of the AP 202.

The transmitter 210 may further apply the array of processing blocks 302 and the processing block 306 for reconstructing the feedback matrix *v* for one or more additional streams, for example, five additional streams and may store the reconstructed feedback matrix *v* of the additional streams in the memory 308.

The transmitter 210 may apply a processing block 310 to compute the SINR for each tone of each of the streams (e.g. the primary and the additional five streams) based on the iteratively computed degradation prediction matrix B of the SNR of the respective tone of the primary stream with respect to an increasing number of streams of the other five streams evaluated to be grouped together in a group.

Moreover, the processing block 310 may compute the degradation prediction matrix B in an iterative sequence according to equation 2 as described in step 112 for the prolonged process 102 and in step 122 for the instantaneous process 104. During each iteration of the iterative sequence a single column of the degradation prediction matrix B is computed based on a next best SNR column of the respective feedback matrices *v*. As such the prediction matrix B is computed iteratively for each stream using decreasing best SNR columns selected from the respective feedback matrices *v*. This implementation may significantly reduce the memory size required by the processing block 310 since it may store only a single column of the respective feedback matrices *v* at any given time.

During each iteration of the iterative computation, the degradation prediction matrix B computed for the current group may be stored in a memory 312 to serve as basis for computation of the next order group during the next iteration of the iterative computation. As such, for each iteration *n*, i.e. computing the degradation prediction matrix *B* for a group comprising *n* streams, the memory 312 stores the prediction matrix $B_{n-1}$ for the group of the preceding order, i.e., comprising *n* - 1 streams.

Based on the degradation prediction matrix B computed for each of the groups, the processing block 310 may compute the SINR for each of the tones with respect to the other streams included in the respective group according to equation 3 as described in step 112 for the prolonged process 102 and in step 122 for the instantaneous process 104.

Optionally, as described in step 112, while the processing block 310 computes the SINR for a first group of streams having a certain order, i.e. comprising a certain number of streams, the array of processing blocks 304 and the processing block 306 may simultaneously process another stream. As such, while the processing block 310 computes the SINR for the group of order *n* - 1 (i.e., comprising *n* - 1 streams), for example, 2, the array of processing blocks 304 and the processing block 306 may simultaneously process the $n^{th}$ stream, for example, the 3rd stream.

The transmitter 210 may apply a processing block 314 to compute the factorized of the SINR of each of the SINR values computed for each of the tones (or subset of tones) of the primary stream compared to each of the other streams. In particular, the processing block 314 may apply 10 *log*() operation to convert the SINR from a linear scale to a logarithmic scale.

Since the beamforming reports corresponding to the different streams (e.g. the primary and the additional five streams) may not be synchronized in time, the transmitter 210 may apply one or more mechanisms 316 for synchronizing the data extracted from the beamforming reports in the time domain, in particular, the SNR values reported for the tones of the respective streams in the beamforming reports. Moreover, due to the serial processing of the streams in the processing blocks array 304 and the processing block 306, the SNR values reported for the tones of the respective streams must be synchronized in the processing pipeline. Using synchronized stream feedback data which relates to the same time may be essential to accurately reconstruct the feedback matrices *v* and compute the SINR accordingly for the plurality of streams. The mechanism(s) 316 may include, for example, delaying propagation of the data extracted from one or more of the beamforming reports to adjust the flow of the data in the processing pipeline of the architecture 300. In another example, compressed data may be retrieved from the beamforming reports stored in the memory 302 in a synchronized manner such that the data retrieval is done from beamforming reports according to their time stamp rather than according to their order of storage in the memory 302.

The transmitter 210 may store the SINR values computed for the tones of the plurality of streams in a memory 318, for example, a First-In first-Out (FIFO) memory. Moreover, while storing the SINR values the transmitter 210 may continuously search for a lowest (minimal) SINR value among the SINRs computed for the tones and store the minimal SINR. The transmitter 210 may compare each newly received (and stored) SINR with the currently stored minimal SINR and in case the value of the newly received SINR is lower than the value of the currently stored minimal SINR, the transmitter may replace the currently stored minimal SINR with the newly received SINR. The transmitter 210 may repeat this search over all SINR values computed for each of the tones of the respective stream (i.e., the primary stream).

The transmitter 210 may apply a processing block 320 to compute the ESINR for the respective stream (i.e., the primary stream) by aggregating the SINR values computed for the plurality of tones according to equation 4 as described in step 114 for the prolonged process 102 and in step 124 for the instantaneous process 104. Moreover, the processing block 320 may subtract the minimal SINR stored in the memory 318 from all SINR values in order to normalize the SINR values to achieve a wider range for computing the ESINR aggregating the SINR values of the tones. After the ESINR is computed, the processing block 320 may apply the minimal SINR to the computed ESINR to restore the ESINR to its correct range.

The processing block 320 may employ one or more implementations and/or techniques as known in the art in order to optimize in terms of computing resources (e.g. computing elements, memory resources, etc.) and/or computing time. For example, the processing block 320 may utilize one or more Look-Up Tables (LUT) for executing the logarithmic computations according to equation 4. In another example, the processing block 320 may utilize one or more sum units which may be optionally configured to process floating point values for executing the sigma computations according to equation 4.

The transmitter 210 may update one or more grouping tables stored in a memory 322 of the AP 202 to include the groups constructed for the respective stream, i.e., the primary stream as described in step 116 for the prolonged process 102 and in step 126 for the instantaneous process 104.

The transmitter 210 may further apply a processing block 324 to compute the cumulative throughput for each of the groups listed in the grouping table(s) by aggregating the estimated throughput of the plurality of streams included in the respective group as described in step 116 for the prolonged process 102 and in step 126 for the instantaneous process 104.

Based on the cumulative throughput computation, the transmitter 210 may apply a processing block 326 to sort the groups according to their cumulative throughput as described in step 116 for the prolonged process 102 and in step 126 for the instantaneous process 104. For example, the processing block 326 may sort the groups in the grouping table(s) stored in the memory 322 according to an ascending and/or descending order of the cumulative throughout computed for each of the groups.

Due to the sorting, the transmitter 210, in particular the MAC accessing the grouping table(s) to select a group of streams for transmission in a next MU-MIMO or SU-MIMO transmission may rapidly traverse the grouping table(s) to identify a group which may yield best cumulative performance for each of the streams.

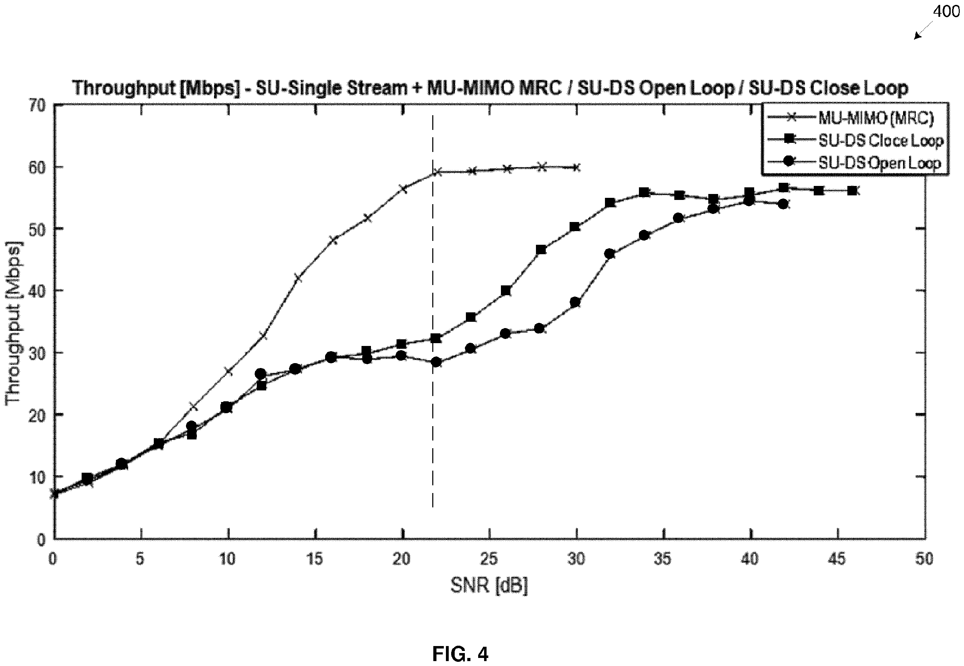

Reference is now made to FIG. 4, which is a graph chart presenting MIMO throughout performance of several legacy schemes compared to the iterative ESINR based process of optimizing streams grouping for MU-MIMO transmissions, according to some embodiments of the present invention. A graph chart 400 presents a comparison of cumulative throughput of a plurality of streams transmitted as groups in MU-MIMO transmission for groups selected according to the ESINR based grouping executed by a transmitter such as the transmitter 210 of an AP such as the AP 202 executing a process such as the process 100 compared to the cumulative throughput of SU-MIMO transmissions of streams grouped by legacy MIMO transmission schemes, for example, Single-User Dual Stream (SU-DS) closed loop and SU-DS open loop.

As evident from the graph chart 400, the grouping applied in the MU-MIMO transmission according to the ESINR based grouping may yield a significantly increase the cumulative throughput compared to the legacy schemes. At some scenarios the cumulative throughput may be almost doubled compared to the legacy schemes, for example, -80% at SNR of 22dB.

It is expected that during the life of a patent maturing from this application many relevant systems, methods and computer programs will be developed and the scope of the terms channel bandwidth and IEEE 802.11 signaling resources are intended to include all such new technologies a priori.

As used herein the term "about" refers to $\pm$ 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals there between.

**Claims**

1. A transmitter (210, 310) of a wireless access point (202, 302), AP, for optimizing stream grouping to enhance multi-user multi input multi output, MU-MIMO, transmissions, comprising:

   a circuitry (302, 304, 306, 308, 310, 213, 314, 318, 320, 322, 324, 326) configured to conduct an iterative prolonged process (102) and an iterative instantaneous process (104),

      the iterative prolonged process (102) comprising:

         receiving (110) a plurality of beamforming reports each corresponding to a respective one of a plurality of streams transmitted simultaneously by the AP to at least one station (204_1 to 204_9),
         computing (112) an effective signal plus interference to noise ratio, ESINR, for each of the plurality of streams with respect to at least one other stream of the plurality of streams based on the plurality of beamforming reports, and
         updating (116) a grouping table associated with each of the plurality of streams to include at least one group of streams presenting best ESINR for the respective stream; and

      the iterative instantaneous process (104) comprising:

         computing (122) the ESINR for at least one of the plurality of streams using a single most recent beamforming report received for each stream, and
         updating (126) the at least one group in the grouping table to include at least one additional stream presenting best ESINR;

   wherein for each MU-MIMO transmission, the transmitter (210, 310) selects a best ESINR group from the updated grouping table of one of the plurality of streams;
   wherein the circuitry (302, 304, 306, 308, 310, 213, 314, 318, 320, 322, 324, 326) is configured to compute the ESINR for each of the plurality of streams by aggregating (114) a plurality of signal plus interference to noise ratios, SINRs, each SINR is computed for a respective one of a plurality of tones of a spectrum of the respective stream;
   wherein the circuitry (302, 304, 306, 308, 310, 213, 314, 318, 320, 322, 324, 326) is configured to compute the SINR for each of the plurality of tones of the respective stream based on a degradation prediction matrix of a signal to noise ratio, SNR, of the respective tone with respect to at least one other stream of the plurality of streams included in a group with the respective stream; and
   wherein the circuitry (302, 304, 306, 308, 310, 213, 314, 318, 320, 322, 324, 326) is further configured to compute the SINR for each of the plurality of tones of each the respective stream based on a diagonal vector of the degradation prediction matrix (310) computed for the respective tone.

2. The transmitter (210, 310) of claim 1, wherein the iterative prolonged process (102) and the iterative instantaneous process (104) each comprise a plurality of iterations, in each of the plurality of iterations the ESINR is computed based on at least one newly received beamforming report received for at least one of the plurality of streams to continuously update the grouping table of at least some of the plurality of streams for use during a respective one of a plurality of MU-MIMO transmissions.

3. The transmitter (210, 310) of claim 1, wherein the circuitry (302, 304, 306, 308, 310, 213, 314, 318, 320, 322, 324, 326) is configured to iteratively compute the SINR for each of the plurality of tones of the respective stream for groups of increasing order comprising the respective stream and an increasing number of additional streams of the plurality of streams, the SINR computed for the respective tone with respect to a second group of a certain order is computed in a certain iteration based on the SINR computed for the respective tone during a preceding iteration with respect to a first group of a lower order, the second group comprising at least one additional stream compared to the first group.

4. The transmitter (210, 310) of claim 1, wherein the circuitry (302, 304, 306, 308, 310, 213, 314, 318, 320, 322, 324, 326) is configured to compute the SINR for each tone of the respective stream using a feedback matrix (306) reconstructed for the respective tone by decompressing compressed data contained in the feedback report of the respective stream.

5. The transmitter (210, 310) of claim 4, wherein the circuitry (302, 304, 306, 308, 310, 213, 314, 318, 320, 322, 324, 326) is further configured to compute the SINR for the respective tone in an iterative sequence, a single column of the reconstructed feedback matrix of the respective stream and a single column of the reconstructed feedback matrix (306) of the at least one additional stream are used in each iteration of the iterative sequence, the single column selected in each iteration of the iterative sequence is a next best SNR column of the reconstructed feedback matrix (306).

6. The transmitter (210, 310) of claim 5, further comprising storing in each iteration only a respective next best SNR column.

7. The transmitter (210, 310) of claim 1, wherein the circuitry (302, 304, 306, 308, 310, 213, 314, 318, 320, 322, 324, 326) is further configured to simultaneously reconstruct a feedback matrix (306) for each of the plurality of tones of at least one additional stream of the plurality of streams included in a higher order group created for the respective stream while computing the SINR for a lower order group created for the respective stream, the lower order group does not include the at least one additional stream.

8. The transmitter (210, 310) of claim 1, wherein the circuitry (302, 304, 306, 308, 310, 213, 314, 318, 320, 322, 324, 326) is further configured to store a factorized SINR value of the SINR computed (314) for each of the plurality of tones to convert the SINR which is computed in a linear domain from a linear scale to a logarithmic scale.

9. The transmitter (210, 310) of any one of the preceding claims, wherein the circuitry (302, 304, 306, 308, 310, 213, 314, 318, 320, 322, 324, 326) is configured to compute (320) the ESINR for each of the plurality of streams for each of a plurality of modulation and coding schemes, MCS, employed by the transmitter (210, 310).

10. The transmitter (210, 310) of any one of the preceding claims, wherein the circuitry (302, 304, 306, 308, 310, 213, 314, 318, 320, 322, 324, 326) is further configured to associate (324) the at least one group in the grouping table of each of the plurality of streams with a cumulative throughput computed for the at least one group by aggregating a throughput of the streams included in the at least one group.

11. The transmitter (210, 310) of claim 10, wherein the circuitry (302, 304, 306, 308, 310, 213, 314, 318, 320, 322, 324, 326) is further configured to select during each iteration the group of streams for a respective MU-MINO transmission by rapidly traversing the grouping table sorted according to the cumulative throughput computed for the at least one group for each of the plurality of streams to identify a group having highest cumulative throughput.

12. A method (100) of optimizing stream grouping for a transmitter (210, 310) of a wireless access point (202, 302), AP, to enhance multi-user multi input multi output, MU-MIMO, transmission, comprising:

    executing an iterative prolonged process (102) and an iterative instantaneous process (104),

the iterative prolonged process (102) comprising a plurality of iterations each comprising:

> receiving (110) a plurality of beamforming reports each corresponding to a respective one of a plurality of streams transmitted simultaneously by the AP to at least one station (204_1 to 204_9),
> computing (112) an effective signal plus interference to noise ratio, ESINR, for each of the plurality of streams with respect to at least one other stream of the plurality of streams based on the plurality of beamforming reports and the ESINR computed for the respective stream in a preceding iteration, and
> updating (116) a grouping table associated with each of the plurality of streams to include at least one group of streams presenting best ESINR for the respective stream; and

the iterative instantaneous process (104) comprising a plurality of iterations each comprising:

> computing (122) the ESINR for at least one of the plurality of streams using a single most recent beamforming report received for each stream, and
> updating (126) the at least one group in the grouping table to include at least one additional stream presenting best ESINR;

wherein for each MU-MIMO transmission, the transmitter (210, 310) selects a best ESINR group from the updated grouping table of one of the plurality of streams;

further comprising computing the ESINR for each of the plurality of streams by aggregating (114) a plurality of signal plus interference to noise ratios, SINRs, each SINR is computed for a respective one of a plurality of tones of a spectrum of the respective stream;

computing the SINR for each of the plurality of tones of the respective stream based on a degradation prediction matrix of a signal to noise ratio, SNR, of the respective tone with respect to at least one other stream of the plurality of streams included in a group with the respective stream; and

computing the SINR for each of the plurality of tones of each the respective stream based on a diagonal vector of the degradation prediction matrix (310) computed for the respective tone.

13. A transmitter (210, 310) of a wireless access point (202, 302), AP, for optimizing stream grouping to enhance multi-user multi input multi output, MU-MIMO, transmissions, comprising:

> a circuitry (302, 304, 306, 308, 310, 213, 314, 318, 320, 322, 324, 326) configured to conduct an iterative prolonged process (102) and an iterative instantaneous process (104),

>> the iterative prolonged process (102) comprising:

>>> receiving (110) a plurality of beamforming reports each corresponding to a respective one of a plurality of streams transmitted simultaneously by the AP to at least one station (204_1 to 204_9),
>>> computing (112) an effective signal plus interference to noise ratio, ESINR, for each of the plurality of streams with respect to at least one other stream of the plurality of streams based on the plurality of beamforming reports, and
>>> updating (116) a grouping table associated with each of the plurality of streams to include at least one group of streams presenting best ESINR for the respective stream; and

>> the iterative instantaneous process (104) comprising:

>>> computing (122) the ESINR for at least one of the plurality of streams using a single most recent beamforming report received for each stream, and
>>> updating (126) the at least one group in the grouping table to include at least one additional stream presenting best ESINR;

> wherein for each MU-MIMO transmission, the transmitter (210, 310) selects a best ESINR group from the updated grouping table of one of the plurality of streams;
> wherein the circuitry (302, 304, 306, 308, 310, 213, 314, 318, 320, 322, 324, 326) is configured to compute the ESINR for each of the plurality of streams by aggregating (114) a plurality of signal plus interference to noise ratios, SINRs, each SINR is computed for a respective one of a plurality of tones of a spectrum of the respective stream;
> wherein the circuitry (302, 304, 306, 308, 310, 213, 314, 318, 320, 322, 324, 326) is configured to compute the SINR for each of the plurality of tones of the respective stream based on a degradation prediction matrix of a signal to noise ratio, SNR, of the respective tone with respect to at least one other stream of the plurality of streams included in a group with the respective stream;

wherein the circuitry (302, 304, 306, 308, 310, 213, 314, 318, 320, 322, 324, 326) is configured to compute the SINR for each tone of the respective stream using a feedback matrix (306) reconstructed for the respective tone by decompressing compressed data contained in the feedback report of the respective stream; and

wherein the circuitry (302, 304, 306, 308, 310, 213, 314, 318, 320, 322, 324, 326) is further configured to compute the SINR for the respective tone in an iterative sequence, a single column of the reconstructed feedback matrix of the respective stream and a single column of the reconstructed feedback matrix (306) of the at least one additional stream are used in each iteration of the iterative sequence, the single column selected in each iteration of the iterative sequence is a next best SNR column of the reconstructed feedback matrix (306).

14. A method (100) of optimizing stream grouping for a transmitter (210, 310) of a wireless access point (202, 302), AP, to enhance multi-user multi input multi output, MU-MIMO, transmission, comprising:

executing an iterative prolonged process (102) and an iterative instantaneous process (104),

the iterative prolonged process (102) comprising a plurality of iterations each comprising:

receiving (110) a plurality of beamforming reports each corresponding to a respective one of a plurality of streams transmitted simultaneously by the AP to at least one station (204_1 to 204_9), computing (112) an effective signal plus interference to noise ratio, ESINR, for each of the plurality of streams with respect to at least one other stream of the plurality of streams based on the plurality of beamforming reports and the ESINR computed for the respective stream in a preceding iteration, and updating (116) a grouping table associated with each of the plurality of streams to include at least one group of streams presenting best ESINR for the respective stream; and

the iterative instantaneous process (104) comprising a plurality of iterations each comprising:

computing (122) the ESINR for at least one of the plurality of streams using a single most recent beamforming report received for each stream, and updating (126) the at least one group in the grouping table to include at least one additional stream presenting best ESINR;

wherein for each MU-MIMO transmission, the transmitter (210, 310) selects a best ESINR group from the updated grouping table of one of the plurality of streams;

further comprising computing the ESINR for each of the plurality of streams by aggregating (114) a plurality of signal plus interference to noise ratios, SINRs, each SINR is computed for a respective one of a plurality of tones of a spectrum of the respective stream;

computing the SINR for each of the plurality of tones of the respective stream based on a degradation prediction matrix of a signal to noise ratio, SNR, of the respective tone with respect to at least one other stream of the plurality of streams included in a group with the respective stream;

further comprising computing the SINR for each tone of the respective stream using a feedback matrix (306) reconstructed for the respective tone by decompressing compressed data contained in the feedback report of the respective stream; and

computing the SINR for the respective tone in an iterative sequence, a single column of the reconstructed feedback matrix of the respective stream and a single column of the reconstructed feedback matrix (306) of the at least one additional stream are used in each iteration of the iterative sequence, the single column selected in each iteration of the iterative sequence is a next best SNR column of the reconstructed feedback matrix (306).

**Patentansprüche**

1. Sender (210, 310) eines Drahtloszugangspunkts (202, 302) bzw. Drahtlos-AP zur Optimierung von Stromgruppierung zur Verbesserung von "Multi-User-Multi-Input-Multi-Output"- bzw. MU-MIMO-Übertragungen, umfassend:

eine Schaltungsanordnung (302, 304, 306, 308, 310, 213, 314, 318, 320, 322, 324, 326), ausgelegt zum Ausführen eines iterativen andauernden Prozesses (102) und eines iterativen momentan Prozesses (104),

wobei der iterative andauernde Prozess (102) Folgendes umfasst:

Empfangen (110) mehrerer Strahlformungsmeldungen, die jeweils einem entsprechenden von mehreren gleichzeitig durch den AP an mindestens eine Station (204_1 bis 204_9) übertragenen Strömen entsprechen,

Berechnen (112) eines effektiven Signal-plus-Interferenz-Rausch-Verhältnisses bzw. ESINR für jeden der mehreren Ströme in Bezug auf mindestens einen anderen Strom der mehreren Ströme basierend auf den mehreren Strahlformungsmeldungen und

Aktualisieren (116) einer mit jedem der mehreren Ströme assoziierten Gruppierungstabelle, sodass sie mindestens eine Gruppe von Strömen beinhaltet, die ein bestes ESINR für den jeweiligen Strom präsentiert; und

der iterative momentane Prozess (104) Folgendes umfasst:

Berechnen (122) des ESINR für mindestens einen der mehreren Ströme unter Verwendung einer für jeden Strom empfangenen einzelnen aktuellen Strahlformungsmeldung und

Aktualisieren (126) der mindestens einen Gruppe in der Gruppierungstabelle, sodass sie mindestens einen zusätzlichen Strom, der ein bestes ESINR präsentiert, beinhaltet;

wobei der Sender (210, 310) für jede MU-MIMO-Übertragung eine beste ESINR-Gruppe aus der aktualisierten Gruppierungstabelle eines der mehreren Ströme auswählt; wobei die Schaltungsanordnung (302, 304, 306, 308, 310, 213, 314, 318, 320, 322, 324, 326) ausgelegt ist zum Berechnen des ESINR für jeden der mehreren Ströme durch Aggregieren (114) mehrerer Signal-plus-Interferenz-Rausch-Verhältnisse bzw. SINRs, wobei jedes SINR für einen jeweiligen von mehreren Tönen eines Spektrums des jeweiligen Stroms berechnet wird;

wobei die Schaltungsanordnung (302, 304, 306, 308, 310, 213, 314, 318, 320, 322, 324, 326) ausgelegt ist zum Berechnen des SINR für jeden der mehreren Töne des jeweiligen Stroms basierend auf einer Beeinträchtigungsvorhersagematrix eines Signal-Rausch-Verhältnisses bzw. SNR des jeweiligen Tons in Bezug auf mindestens einen anderen Strom der mehreren Ströme, die in einer Gruppe mit dem jeweiligen Strom enthalten sind; und

wobei die Schaltungsanordnung (302, 304, 306, 308, 310, 213, 314, 318, 320, 322, 324, 326) ferner ausgelegt ist zum Berechnen des SINR für jeden der mehreren Töne jedes jeweiligen Stroms basierend auf einem diagonalen Vektor der für den jeweiligen Ton berechneten Beeinträchtigungsvorhersagematrix (310).

2. Sender (210, 310) nach Anspruch 1, wobei der iterative andauernde Prozess (102) und der iterative momentane Prozess (104) jeweils mehrere Iterationen umfassen, in jeder der mehreren Iterationen das ESINR basierend auf mindestens einer neu empfangenen Strahlformungsmeldung berechnet wird, die für mindestens einen der mehreren Ströme empfangen wird, um die Gruppierungstabelle mindestens einiger der mehreren Ströme zur Verwendung während einer jeweiligen von mehreren MU-MIMO-Übertragungen zu aktualisieren.

3. Sender (210, 310) nach Anspruch 1, wobei die Schaltungsanordnung (302, 304, 306, 308, 310, 213, 314, 318, 320, 322, 324, 326) ausgelegt ist zum iterativen Berechnen des SINR für jeden der mehreren Töne des jeweiligen Stroms für Gruppen steigender Größenordnung, die den jeweiligen Strom und eine steigende Anzahl zusätzlicher Ströme der mehreren Ströme umfassen, wobei das für den jeweiligen Ton in Bezug auf eine zweite Gruppe einer gewissen Größenordnung berechnete SINR in einer gewissen Iteration basierend auf dem für den jeweiligen Ton während einer vorhergehenden Iteration in Bezug auf eine erste Gruppe einer niedrigeren Größenordnung berechneten SINR berechnet wird, wobei die zweite Gruppe im Vergleich zu der ersten Gruppe mindestens einen zusätzlichen Strom umfasst.

4. Sender (210, 310) nach Anspruch 1, wobei die Schaltungsanordnung (302, 304, 306, 308, 310, 213, 314, 318, 320, 322, 324, 326) ausgelegt ist zum Berechnen des SINR für jeden Ton des jeweiligen Stroms unter Verwendung einer Rückkopplungsmatrix (306), die für den jeweiligen Ton durch Dekomprimieren von in der Rückkopplungsmeldung des jeweiligen Stroms enthaltenen komprimierten Daten rekonstruiert wird.

5. Sender (210, 310) nach Anspruch 4, wobei die Schaltungsanordnung (302, 304, 306, 308, 310, 213, 314, 318, 320, 322, 324, 326) ferner ausgelegt ist zum Berechnen des SINR für den jeweiligen Ton in einer iterativen Sequenz, wobei eine einzelne Spalte der rekonstruierten Rückkopplungsmatrix des jeweiligen Stroms und eine einzelne Spalte der rekonstruierten Rückkopplungsmatrix (306) des mindestens einen zusätzlichen Stroms in jeder Iteration der iterativen Sequenz verwendet werden, wobei die in jeder Iteration der iterativen Sequenz ausgewählte einzelne Spalte eine nächstbeste SNR-Spalte der rekonstruierten Rückkopplungsmatrix (306) ist.

6. Sender (210, 310) nach Anspruch 5, ferner umfassend Speichern nur einer jeweiligen nächstbesten SNR-Spalte in jeder Iteration.

7. Sender (210, 310) nach Anspruch 1, wobei die Schaltungsanordnung (302, 304, 306, 308, 310, 213, 314, 318, 320, 322, 324, 326) ferner ausgelegt ist zum gleichzeitigen Rekonstruieren einer Rückkopplungsmatrix (306) für jeden der mehreren Töne mindestens eines zusätzlichen Stroms der mehreren Ströme, die in einer für den jeweiligen Strom erstellten Gruppe höherer Größenordnung enthalten sind, während des Berechnens des SINR für eine für den jeweiligen Strom erstellte Gruppe niedrigerer Größenordnung, wobei die Gruppe niedrigerer Größenordnung den mindestens einen zusätzlichen Strom nicht beinhaltet.

8. Sender (210, 310) nach Anspruch 1, wobei die Schaltungsanordnung (302, 304, 306, 308, 310, 213, 314, 318, 320, 322, 324, 326) ferner ausgelegt ist zum Speichern eines faktorisierten SINR-Werts des für jeden der mehreren Töne berechneten (314) SINR, um das SINR, das in einer linearen Domäne berechnet wird, von einem linearen Maßstab in einen logarithmischen Maßstab umzuwandeln.

9. Sender (210, 310) nach einem der vorhergehenden Ansprüche, wobei die Schaltungsanordnung (302, 304, 306, 308, 310, 213, 314, 318, 320, 322, 324, 326) ausgelegt ist zum Berechnen (320) des ESINR für jeden der mehreren Ströme für jedes von mehreren durch den Sender (210, 310) eingesetzten Modulations-und-Codierungsschemas bzw. MCS.

10. Sender (210, 310) nach einem der vorhergehenden Ansprüche, wobei die Schaltungsanordnung (302, 304, 306, 308, 310, 213, 314, 318, 320, 322, 324, 326) ferner ausgelegt ist zum Verknüpfen (324) der mindestens einen Gruppe in der Gruppierungstabelle jedes der mehreren Ströme mit einem kumulativen Durchsatz, der für die mindestens eine Gruppe durch Aggregieren eines Durchsatzes der in der mindestens einen Gruppe enthaltenen Ströme berechnet wird.

11. Sender (210, 310) nach Anspruch 10, wobei die Schaltungsanordnung (302, 304, 306, 308, 310, 213, 314, 318, 320, 322, 324, 326) ferner ausgelegt ist zum Auswählen, während jeder Iteration, der Gruppe von Strömen für eine jeweilige MU-MIMO-Übertragung durch schnelles Durchqueren der Gruppierungstabelle, die gemäß dem für die mindestens eine Gruppe berechneten kumulativen Durchsatz sortiert ist, für jeden der mehreren Ströme, um eine Gruppe mit einem höchsten kumulativen Durchsatz zu identifizieren.

12. Verfahren (100) zur Optimierung von Stromgruppierung für einen Sender (210, 310) eines Drahtloszugangspunkts (202, 302) bzw. Drahtlos-AP zur Verbesserung von "Multi-User-Multi-Input-Multi-Output"- bzw. MU-MIMO-Übertragung, umfassend:

Ausführen eines iterativen andauernden Prozesses (102) und eines iterativen momentan Prozesses (104), wobei der iterative andauernde Prozess (102) mehrere Iterationen umfasst, die jeweils Folgendes umfassen:

Empfangen (110) mehrerer Strahlformungsmeldungen, die jeweils einem entsprechenden von mehreren gleichzeitig durch den AP an mindestens eine Station (204_I bis 204_9) übertragenen Strömen entsprechen, Berechnen (112) eines effektiven Signal-plus-Interferenz-Rausch-Verhältnisses bzw. ESINR für jeden der mehreren Ströme in Bezug auf mindestens einen anderen Strom der mehreren Ströme basierend auf den mehreren Strahlformungsmeldungen und dem für den jeweiligen Strom in einer vorhergehenden Iteration berechneten ESINR und Aktualisieren (116) einer mit jedem der mehreren Ströme assoziierten Gruppierungstabelle, sodass sie mindestens eine Gruppe von Strömen beinhaltet, die ein bestes ESINR für den jeweiligen Strom präsentiert; und der iterative momentane Prozess (104) mehrere Iterationen umfasst, die jeweils Folgendes umfassen:

Berechnen (122) des ESINR für mindestens einen der mehreren Ströme unter Verwendung einer für jeden Strom empfangenen einzelnen aktuellen Strahlformungsmeldung und Aktualisieren (126) der mindestens einen Gruppe in der Gruppierungstabelle, sodass sie mindestens einen zusätzlichen Strom, der ein bestes ESINR präsentiert, beinhaltet; wobei der Sender (210, 310) für jede MU-MIMO-Übertragung eine beste ESINR-Gruppe aus der aktualisierten Gruppierungstabelle eines der mehreren Ströme auswählt; ferner umfassend Berechnen des ESINR für jeden der mehreren Ströme durch Aggregieren (114) mehrerer Signal-plus-Interferenz-Rausch-Verhältnisse bzw. SINRs, wobei jedes SINR für einen jeweiligen von mehreren Tönen eines Spektrums des jeweiligen Stroms berechnet wird;

Berechnen des SINR für jeden der mehreren Töne des jeweiligen Stroms basierend auf einer Beeinträchtigungsvorhersagematrix eines Signal-Rausch-Verhältnisses bzw. SNR des jeweiligen Tons in Bezug auf mindestens einen anderen Strom der mehreren Ströme, die in einer Gruppe mit dem jeweiligen Strom enthalten sind; und

Berechnen des SINR für jeden der mehreren Töne jedes jeweiligen Stroms basierend auf einem diagonalen Vektor der für den jeweiligen Ton berechneten Beeinträchtigungsvorhersagematrix (310).

**13.** Sender (210, 310) eines Drahtloszugangspunkts (202, 302) bzw. Drahtlos-AP zur Optimierung von Stromgruppierung zur Verbesserung von "Multi-User-Multi-Input-Multi-Output"- bzw. MU-MIMO-Übertragungen, umfassend:

eine Schaltungsanordnung (302, 304, 306, 308, 310, 213, 314, 318, 320, 322, 324, 326), ausgelegt zum Ausführen eines iterativen andauernden Prozesses (102) und eines iterativen momentan Prozesses (104),
wobei der iterative andauernde Prozess (102) Folgendes umfasst:

Empfangen (110) mehrerer Strahlformungsmeldungen, die jeweils einem entsprechenden von mehreren gleichzeitig durch den AP an mindestens eine Station (204_l bis 204_9) übertragenen Strömen entsprechen,
Berechnen (112) eines effektiven Signal-plus-Interferenz-Rausch-Verhältnisses bzw. ESINR für jeden der mehreren Ströme in Bezug auf mindestens einen anderen Strom der mehreren Ströme basierend auf den mehreren Strahlformungsmeldungen und Aktualisieren (116) einer mit jedem der mehreren Ströme assoziierten Gruppierungstabelle, sodass sie mindestens eine Gruppe von Strömen beinhaltet, die ein bestes ESINR für den jeweiligen Strom präsentiert; und
der iterative momentane Prozess (104) Folgendes umfasst:

Berechnen (122) des ESINR für mindestens einen der mehreren Ströme unter Verwendung einer für jeden Strom empfangenen einzelnen aktuellen Strahlformungsmeldung und
Aktualisieren (126) der mindestens einen Gruppe in der Gruppierungstabelle, sodass sie mindestens einen zusätzlichen Strom, der ein bestes ESINR präsentiert, beinhaltet;
wobei der Sender (210, 310) für jede MU-MIMO-Übertragung eine beste ESINR-Gruppe aus der aktualisierten Gruppierungstabelle eines der mehreren Ströme auswählt; wobei die Schaltungsanordnung (302, 304, 306, 308, 310, 213, 314, 318, 320, 322, 324, 326) ausgelegt ist zum Berechnen des ESINR für jeden der mehreren Ströme durch Aggregieren (114) mehrerer Signal-plus-Interferenz-Rausch-Verhältnisse bzw. SINRs, wobei jedes SINR für einen jeweiligen von mehreren Tönen eines Spektrums des jeweiligen Stroms berechnet wird;
wobei die Schaltungsanordnung (302, 304, 306, 308, 310, 213, 314, 318, 320, 322, 324, 326) ausgelegt ist zum Berechnen des SINR für jeden der mehreren Töne des jeweiligen Stroms basierend auf einer Beeinträchtigungsvorhersagematrix eines Signal-Rausch-Verhältnisses bzw. SNR des jeweiligen Tons in Bezug auf mindestens einen anderen Strom der mehreren Ströme, die in einer Gruppe mit dem jeweiligen Strom enthalten sind;
wobei die Schaltungsanordnung (302, 304, 306, 308, 310, 213, 314, 318, 320, 322, 324, 326) ausgelegt ist zum Berechnen des SINR für jeden Ton des jeweiligen Stroms unter Verwendung einer Rückkopplungsmatrix (306), die für den jeweiligen Ton durch Dekomprimieren von in der Rückkopplungsmeldung des jeweiligen Stroms enthaltenen komprimierten Daten rekonstruiert wird; und
wobei die Schaltungsanordnung (302, 304, 306, 308, 310, 213, 314, 318, 320, 322, 324, 326) ferner ausgelegt ist zum Berechnen des SINR für den jeweiligen Ton in einer iterativen Sequenz, wobei eine einzelne Spalte der rekonstruierten Rückkopplungsmatrix des jeweiligen Stroms und eine einzelne Spalte der rekonstruierten Rückkopplungsmatrix (306) des mindestens einen zusätzlichen Stroms in jeder Iteration der iterativen Sequenz verwendet werden, wobei die in jeder Iteration der iterativen Sequenz ausgewählte einzelne Spalte eine nächstbeste SNR-Spalte der rekonstruierten Rückkopplungsmatrix (306) ist.

**14.** Verfahren (100) zur Optimierung von Stromgruppierung für einen Sender (210, 310) eines Drahtloszugangspunkts (202, 302) bzw. Drahtlos-AP zur Verbesserung von "Multi-User-Multi-Input-Multi-Output"- bzw. MU-MIMO-Übertragung, umfassend:

Ausführen eines iterativen andauernden Prozesses (102) und eines iterativen momentan Prozesses (104),
wobei der iterative andauernde Prozess (102) mehrere Iterationen umfasst, die jeweils Folgendes umfassen:

Empfangen (110) mehrerer Strahlformungsmeldungen, die jeweils einem entsprechenden von mehreren gleichzeitig durch den AP an mindestens eine Station (204_l bis 204_9) übertragenen Strömen entsprechen, Berechnen (112) eines effektiven Signal-plus-Interferenz-Rausch-Verhältnisses bzw. ESINR für jeden der mehreren Ströme in Bezug auf mindestens einen anderen Strom der mehreren Ströme basierend auf den mehreren Strahlformungsmeldungen und dem für den jeweiligen Strom in einer vorhergehenden Iteration berechneten ESINR und Aktualisieren (116) einer mit jedem der mehreren Ströme assoziierten Gruppierungstabelle, sodass sie mindestens eine Gruppe von Strömen beinhaltet, die ein bestes ESINR für den jeweiligen Strom präsentiert; und

der iterative momentane Prozess (104) mehrere Iterationen umfasst, die jeweils Folgendes umfassen:

Berechnen (122) des ESINR für mindestens einen der mehreren Ströme unter Verwendung einer für jeden Strom empfangenen einzelnen aktuellen Strahlformungsmeldung und

Aktualisieren (126) der mindestens einen Gruppe in der Gruppierungstabelle, sodass sie mindestens einen zusätzlichen Strom, der ein bestes ESINR präsentiert, beinhaltet;

wobei der Sender (210, 310) für jede MU-MIMO-Übertragung eine beste ESINR-Gruppe aus der aktualisierten Gruppierungstabelle eines der mehreren Ströme auswählt; ferner umfassend Berechnen des ESINR für jeden der mehreren Ströme durch Aggregieren (114) mehrerer Signal-plus-Interferenz-Rausch-Verhältnisse bzw. SINRs, wobei jedes SINR für einen jeweiligen von mehreren Tönen eines Spektrums des jeweiligen Stroms berechnet wird;

Berechnen des SINR für jeden der mehreren Töne des jeweiligen Stroms basierend auf einer Beeinträchtigungsvorhersagematrix eines Signal-Rausch-Verhältnisses bzw. SNR des jeweiligen Tons in Bezug auf mindestens einen anderen Strom der mehreren Ströme, die in einer Gruppe mit dem jeweiligen Strom enthalten sind;

ferner umfassend Berechnen des SINR für jeden Ton des jeweiligen Stroms unter Verwendung einer Rückkopplungsmatrix (306), die für den jeweiligen Ton durch Dekomprimieren von in der Rückkopplungsmeldung des jeweiligen Stroms enthaltenen komprimierten Daten rekonstruiert wird; und

Berechnen des SINR für den jeweiligen Ton in einer iterativen Sequenz, wobei eine einzelne Spalte der rekonstruierten Rückkopplungsmatrix des jeweiligen Stroms und eine einzelne Spalte der rekonstruierten Rückkopplungsmatrix (306) des mindestens einen zusätzlichen Stroms in jeder Iteration der iterativen Sequenz verwendet werden, wobei die in jeder Iteration der iterativen Sequenz ausgewählte einzelne Spalte eine nächstbeste SNR-Spalte der rekonstruierten Rückkopplungsmatrix (306) ist.

## Revendications

1. Emetteur (210, 310) d'un point d'accès sans fil (202, 302), AP, pour optimiser le regroupement des flux afin d'améliorer les transmissions à entrées multiples, sorties multiples multi-utilisateur, MU-MIMO, comprenant :
un circuit (302, 304, 306, 308, 310, 213, 314, 318, 320, 322, 324, 326) configuré pour conduire un processus itératif prolongé (102) et un processus itératif instantané (104), le processus itératif prolongé (102) comprenant :

la réception (110) d'une pluralité de rapports de formation de faisceau correspondant chacun à l'un respectif d'une pluralité de flux transmis simultanément par l'AP à au moins une station (204_1 à 204_9),
le calcul (112) d'un rapport signal plus interférences sur bruit efficace, ESINR, pour chaque flux de la pluralité de flux par rapport à au moins un autre flux de la pluralité de flux sur la base de la pluralité de rapports de formation de faisceau, et
la mise à jour (116) d'une table de regroupement associée à chaque flux de la pluralité de flux pour inclure au moins un groupe de flux présentant le meilleur ESINR pour le flux respectif ; et
le processus itératif instantané (104) comprenant :

le calcul (122) de l'ESINR pour au moins un flux de la pluralité de flux en utilisant un unique rapport de formation de flux le plus récent reçu pour chaque flux, et
la mise à jour (126) de l'au moins un groupe dans la table de regroupement pour inclure au moins un flux additionnel présentant le meilleur ESINR ;
l'émetteur (210, 310) sélectionnant, pour chaque transmission MU-MIMO, un groupe ayant le meilleur ESINR à partir de la table de regroupement mise à jour d'un flux de la pluralité de flux ;
le circuit (302, 304, 306, 308, 310, 213, 314, 318, 320, 322, 324, 326) étant configuré pour calculer l'ESINR pour chaque flux de la pluralité de flux en agrégeant (114) une pluralité de rapports signal plus interférences sur bruit, SINR, chaque SINR étant calculé pour une tonalité respective d'une pluralité de tonalités d'un spectre du flux respectif ;
le circuit (302, 304, 306, 308, 310, 213, 314, 318, 320, 322, 324, 326) étant configuré pour calculer le SINR pour chaque tonalité de la pluralité de tonalités du flux respectif sur la base d'une matrice de prédiction de dégradation d'un rapport signal sur bruit, SNR, de la tonalité respective par rapport à au moins un autre flux de la pluralité de flux inclus dans un groupe avec le flux respectif ; et
le circuit (302, 304, 306, 308, 310, 213, 314, 318, 320, 322, 324, 326) étant en outre configuré pour calculer le SINR pour chaque tonalité de la pluralité de tonalités de chaque flux respectif sur la base d'un vecteur diagonal de la matrice de prédiction de dégradation (310) calculée pour la tonalité respective.

2. Emetteur (210, 310) selon la revendication 1, dans lequel le processus itératif prolongé (102) et le processus itératif instantané (104) comprennent chacun une pluralité d'itérations, l'ESINR étant calculé, dans chaque itération de la pluralité d'itérations, sur la base d'au moins un rapport de formation de faisceau nouvellement reçu, reçu pour au moins un flux de la pluralité de flux, pour la mise à jour en continu de la table de regroupement d'au moins certains flux de la pluralité de flux à utiliser pendant une transmission respective d'une pluralité de transmissions MU-MIMO.

3. Emetteur (210, 310) selon la revendication 1, dans lequel le circuit (302, 304, 306, 308, 310, 213, 314, 318, 320, 322, 324, 326) est configuré pour calculer de manière itérative le SINR pour chaque tonalité de la pluralité de tonalités du flux respectif pour des groupes d'ordre croissant comprenant le flux respectif et un nombre croissant de flux additionnels de la pluralité de flux, le SINR calculé pour la tonalité respective par rapport à un deuxième groupe d'un certain ordre étant calculé dans une certaine itération sur la base du SINR calculé pour la tonalité respective pendant une itération précédente par rapport à un premier groupe d'ordre inférieur, le deuxième groupe comprenant au moins un flux additionnel par rapport au premier groupe.

4. Emetteur (210, 310) selon la revendication 1, dans lequel le circuit (302, 304, 306, 308, 310, 213, 314, 318, 320, 322, 324, 326) est configuré pour calculer le SINR pour chaque tonalité du flux respectif en utilisant une matrice de rétroaction (306) reconstruite pour la tonalité respective en décompressant des données compressées contenues dans le rapport de rétroaction du flux respectif.

5. Emetteur (210, 310) selon la revendication 4, dans lequel le circuit (302, 304, 306, 308, 310, 213, 314, 318, 320, 322, 324, 326) est en outre configuré pour calculer le SINR pour la tonalité respective d'une séquence itérative, une unique colonne de la matrice de rétroaction reconstruite du flux respectif et une unique colonne de la matrice de rétroaction reconstruite (306) de l'au moins un flux additionnel étant utilisées dans chaque itération de la séquence itérative, l'unique colonne sélectionnée dans chaque itération de la séquence itérative étant une colonne de meilleur SNR suivant de la matrice de rétroaction reconstruite (306).

6. Emetteur (210, 310) selon la revendication 5, comprenant en outre le stockage dans chaque itération d'uniquement une colonne de meilleur SNR suivant respective.

7. Emetteur (210, 310) selon la revendication 1, dans lequel le circuit (302, 304, 306, 308, 310, 213, 314, 318, 320, 322, 324, 326) est en outre configuré pour reconstruire simultanément une matrice de rétroaction (306) pour chaque tonalité de la pluralité de tonalités d'au moins un flux additionnel de la pluralité de flux inclus dans un groupe d'ordre plus élevé créé pour le flux respectif tout en calculant le SINR pour un groupe d'ordre moins élevé créé pour le flux respectif, le groupe d'ordre moins élevé n'incluant pas l'au moins un flux additionnel.

8. Emetteur (210, 310) selon la revendication 1, dans lequel le circuit (302, 304, 306, 308, 310, 213, 314, 318, 320, 322, 324, 326) est en outre configuré pour stocker une valeur de SINR factorisée du SINR calculé (314) pour chaque tonalité de la pluralité de tonalités, pour convertir le SINR qui est calculé dans un domaine linéaire, d'une échelle linéaire à une échelle logarithmique.

9. Emetteur (210, 310) selon l'une quelconque des revendications précédentes, dans lequel le circuit (302, 304, 306, 308, 310, 213, 314, 318, 320, 322, 324, 326) est configuré pour calculer (320) l'ESINR pour chaque flux de la pluralité de flux pour chaque schéma d'une pluralité de schémas de modulation et de codage, MCS, utilisés par l'émetteur (210, 310).

10. Emetteur (210, 310) selon l'une quelconque des revendications précédentes, dans lequel le circuit (302, 304, 306, 308, 310, 213, 314, 318, 320, 322, 324, 326) est en outre configuré pour associer (324) l'au moins un groupe dans la table de regroupement de chacun de la pluralité de flux avec un débit cumulatif calculé pour l'au moins un groupe par agrégation d'un débit du flux inclus dans l'au moins un groupe.

**11.** Emetteur (210, 310) selon la revendication 10, dans lequel le circuit (302, 304, 306, 308, 310, 213, 314, 318, 320, 322, 324, 326) est en outre configuré pour sélectionner, à chaque itération, le groupe de flux pour une transmission MU-MIMO respective, en parcourant rapidement la table de regroupement triée selon le débit cumulatif calculé pour l'au moins un groupe pour chaque flux de la pluralité de flux pour identifier un groupe ayant le débit cumulatif le plus élevé.

**12.** Procédé (100) pour optimiser le regroupement des flux pour un émetteur (210, 310) d'un point d'accès sans fil (202, 302), AP, afin d'améliorer les transmissions à entrées multiples, sorties multiples multi-utilisateur, MU-MIMO, comprenant :

l'exécution d'un processus itératif prolongé (102) et d'un processus itératif instantané (104),
le processus itératif prolongé (102) comprenant une pluralité d'itérations comprenant chacune :

la réception (110) d'une pluralité de rapports de formation de faisceau correspondant chacun à l'un respectif d'une pluralité de flux transmis simultanément par l'AP à au moins une station (204_1 à 204_9),
le calcul (112) d'un rapport signal plus interférences sur bruit efficace, ESINR, pour chaque flux de la pluralité de flux par rapport à au moins un autre flux de la pluralité de flux sur la base de la pluralité de rapports de formation de faisceau et de l'ESINR calculé pour le flux respectif dans une itération précédente, et
la mise à jour (116) d'une table de regroupement associée à chaque flux de la pluralité de flux pour inclure au moins un groupe de flux présentant le meilleur ESINR pour le flux respectif ; et
le processus itératif instantané (104) comprenant une pluralité d'itérations comprenant chacune :

le calcul (122) de l'ESINR pour au moins un flux de la pluralité de flux en utilisant un unique rapport de formation de flux le plus récent reçu pour chaque flux, et
la mise à jour (126) de l'au moins un groupe dans la table de regroupement pour inclure au moins un flux additionnel présentant le meilleur ESINR ;
l'émetteur (210, 310) sélectionnant, pour chaque transmission MU-MIMO, un groupe ayant le meilleur ESINR à partir de la table de regroupement mise à jour d'un flux de la pluralité de flux ;
comprenant en outre le calcul de l'ESINR pour chaque flux de la pluralité de flux en agrégeant (114) une pluralité de rapports signal plus interférences sur bruit, SINR, chaque SINR étant calculé pour une tonalité respective d'une pluralité de tonalités d'un spectre du flux respectif ;
le calcul du SINR pour chaque tonalité de la pluralité de tonalités du flux respectif sur la base d'une matrice de prédiction de dégradation d'un rapport signal sur bruit, SNR, de la tonalité respective par rapport à au moins un autre flux de la pluralité de flux inclus dans un groupe avec le flux respectif ; et
le calcul du SINR pour chaque tonalité de la pluralité de tonalités de chaque flux respectif sur la base d'un vecteur diagonal de la matrice de prédiction de dégradation (310) calculée pour la tonalité respective.

**13.** Emetteur (210, 310) d'un point d'accès sans fil (202, 302), AP, pour optimiser le regroupement des flux afin d'améliorer les transmissions à entrées multiples, sorties multiples multi-utilisateur, MU-MIMO, comprenant :
un circuit (302, 304, 306, 308, 310, 213, 314, 318, 320, 322, 324, 326) configuré pour conduire un processus itératif prolongé (102) et un processus itératif instantané (104), le processus itératif prolongé (102) comprenant :

la réception (110) d'une pluralité de rapports de formation de faisceau correspondant chacun à l'un respectif d'une pluralité de flux transmis simultanément par l'AP à au moins une station (204_1 à 204_9),
le calcul (112) d'un rapport signal plus interférences sur bruit efficace, ESINR, pour chaque flux de la pluralité de flux par rapport à au moins un autre flux de la pluralité de flux sur la base de la pluralité de rapports de formation de faisceau, et
la mise à jour (116) d'une table de regroupement associée à chaque flux de la pluralité de flux pour inclure au moins un groupe de flux présentant le meilleur ESINR pour le flux respectif ; et
le processus itératif instantané (104) comprenant :

le calcul (122) de l'ESINR pour au moins un flux de la pluralité de flux en utilisant un unique rapport de formation de flux le plus récent reçu pour chaque flux, et
la mise à jour (126) de l'au moins un groupe dans la table de regroupement pour inclure au moins un flux additionnel présentant le meilleur ESINR ;
l'émetteur (210, 310) sélectionnant, pour chaque transmission MU-MIMO, un groupe ayant le meilleur ESINR à partir de la table de regroupement mise à jour d'un flux de la pluralité de flux ;

le circuit (302, 304, 306, 308, 310, 213, 314, 318, 320, 322, 324, 326) étant configuré pour calculer l'ESINR pour chaque flux de la pluralité de flux en agrégeant (114) une pluralité de rapports signal plus interférences sur bruit, SINR, chaque SINR étant calculé pour une tonalité respective d'une pluralité de tonalités d'un spectre du flux respectif ;

le circuit (302, 304, 306, 308, 310, 213, 314, 318, 320, 322, 324, 326) étant configuré pour calculer le SINR pour chaque tonalité de la pluralité de tonalités du flux respectif sur la base d'une matrice de prédiction de dégradation d'un rapport signal sur bruit, SNR, de la tonalité respective par rapport à au moins un autre flux de la pluralité de flux inclus dans un groupe avec le flux respectif ;

le circuit (302, 304, 306, 308, 310, 213, 314, 318, 320, 322, 324, 326) étant configuré pour calculer le SINR pour chaque tonalité du flux respectif en utilisant une matrice de rétroaction (306) reconstruite pour la tonalité respective en décompressant des données compressées contenues dans le rapport de rétroaction du flux respectif ; et

le circuit (302, 304, 306, 308, 310, 213, 314, 318, 320, 322, 324, 326) étant en outre configuré pour calculer le SINR pour la tonalité respective d'une séquence itérative, une unique colonne de la matrice de rétroaction reconstruite du flux respectif et une unique colonne de la matrice de rétroaction reconstruite (306) de l'au moins un flux additionnel étant utilisées dans chaque itération de la séquence itérative, l'unique colonne sélectionnée dans chaque itération de la séquence itérative étant une colonne de meilleur SNR suivant de la matrice de rétroaction reconstruite (306).

14. Procédé (100) pour optimiser le regroupement des flux pour un émetteur (210, 310) d'un point d'accès sans fil (202, 302), AP, afin d'améliorer les transmissions à entrées multiples, sorties multiples multi-utilisateur, MU-MIMO, comprenant :

l'exécution d'un processus itératif prolongé (102) et d'un processus itératif instantané (104),
le processus itératif prolongé (102) comprenant une pluralité d'itérations comprenant chacune :

la réception (110) d'une pluralité de rapports de formation de faisceau correspondant chacun à l'un respectif d'une pluralité de flux transmis simultanément par l'AP à au moins une station (204_1 à 204_9),
le calcul (112) d'un rapport signal plus interférences sur bruit efficace, ESINR, pour chaque flux de la pluralité de flux par rapport à au moins un autre flux de la pluralité de flux sur la base de la pluralité de rapports de formation de faisceau et de l'ESINR calculé pour le flux respectif dans une itération précédente, et
la mise à jour (116) d'une table de regroupement associée à chaque flux de la pluralité de flux pour inclure au moins un groupe de flux présentant le meilleur ESINR pour le flux respectif ; et
le processus itératif instantané (104) comprenant une pluralité d'itérations comprenant chacune :

le calcul (122) de l'ESINR pour au moins un flux de la pluralité de flux en utilisant un unique rapport de formation de flux le plus récent reçu pour chaque flux, et
la mise à jour (126) de l'au moins un groupe dans la table de regroupement pour inclure au moins un flux additionnel présentant le meilleur ESINR ;
l'émetteur (210, 310) sélectionnant, pour chaque transmission MU-MIMO, un groupe ayant le meilleur ESINR à partir de la table de regroupement mise à jour d'un flux de la pluralité de flux ;
comprenant en outre le calcul de l'ESINR pour chaque flux de la pluralité de flux en agrégeant (114) une pluralité de rapports signal plus interférences sur bruit, SINR, chaque SINR étant calculé pour une tonalité respective d'une pluralité de tonalités d'un spectre du flux respectif ;
le calcul du SINR pour chaque tonalité de la pluralité de tonalités du flux respectif sur la base d'une matrice de prédiction de dégradation d'un rapport signal sur bruit, SNR, de la tonalité respective par rapport à au moins un autre flux de la pluralité de flux inclus dans un groupe avec le flux respectif ;
comprenant en outre le calcul du SINR pour chaque tonalité du flux respectif en utilisant une matrice de rétroaction (306) reconstruite pour la tonalité respective en décompressant des données compressées contenues dans le rapport de rétroaction du flux respectif ; et
le calcul du SINR pour la tonalité respective d'une séquence itérative, une unique colonne de la matrice de rétroaction reconstruite du flux respectif et une unique colonne de la matrice de rétroaction reconstruite (306) de l'au moins un flux additionnel étant utilisées dans chaque itération de la séquence itérative, l'unique colonne sélectionnée dans chaque itération de la séquence itérative étant une colonne de meilleur SNR suivant de la matrice de rétroaction reconstruite (306).

100

110
RECEIVE BEAMFORMING REPORTS FOR A PLURALITY OF STREAMS TRANSMITTED BY AN ACCESS POINT

112
COMPUTE AN SINR FOR EACH OF A PLURALITY OF TONES OF EACH STREAM WITH RESPECT TO ONE OR MORE OTHER STREAMS BASED ON THE BEAMFORMING REPORTS

114
COMPUTE AN ESINR FOR EACH OF THE STREAMS BY AGGREGATING THE SINR OF ALL TONES OF THE RESPECTIVE STREAM

116
UPDATE A GROUPING TABLE OF EACH STREAM TO INCLUDE ONE OR MORE GROUPS OF ONE OR MORE ORDERS WHICH PRESENT BEST ESINR

102
PROLONGED PROCESS

120
RETRIEVE A MOST RECENT BEAMFORMING REPORT FOR ONE OR MORE OF THE STREAMS

122
COMPUTE THE SINR FOR THE STREAM(s) WITH RESPECT TO ONE OR MORE ADDITIONAL STREAMS BASED ON THE MOST RECENT BEAMFORMING REPORT(s)

124
COMPUTE THE ESINR FOR THE STREAM(s)

126
UPDATE THE GROUPING TABLE OF THE STREAM(s) TO INCLUDE ONE OR MORE HIGHER ORDER GROUPS (COMPARED TO PROCESS 102) WHICH PRESENT BEST ESINR

104
INSTANTANEOUS PROCESS

130
TRANSMIT MU-MIMO TRANSMISSION COMPRISING STREAMS SELECTED ACCORDING TO THE GROUPING TABLES

FIG. 1

FIG. 2

BEAMFORMING REPORTS RECEIVED FOR ALL STREAMS — 302

SIN / COS — 304

FEEDBACK MATRIX RECONSTRUCT PER TONE — 306

FEEDBACK MATRICES PER TONE: 1ST (PRIMARY) STREAM | 2ND STREAM | 3RD STREAM ... — 308

SINR DEGRADATION COMPUTATION PER TONE — 310

PREVIOUS ORDER GROUP COMPUTATION MATRIX — 312

10Log — 314

COMPRESSED ANGLES OF THE STREAMS

SNR of 1ST (PRIMARY) STREAM — 316

SNR of 2ND STREAM

SNR of Nth STREAM

SYNCHRONIZATION

SINRs OF ALL TONES PER STREAM — 318

ESINR COMPUTATION PER STREAM — 320

GROUPING TABLES UPDATE — 322

CUMULATIVE THROUGHPUT COMPUTATION PER GROUP — 324

GROUPING TABLES SORTED ACCORDING TO THE CUMULATIVE THROUGHPUT — 326

300

**FIG. 3**

**FIG. 4**

EP 3 963 734 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180092102 A1

- US 20180176743 A1